# EUROPEAN PATENT APPLICATION

(11) **EP 1 903 267 A1**
(43) Date of publication of application: **26.03.2008**
(21) Application number: 06780928.5
(22) Date of filing: 10.07.2006
(51) Int. Cl.: F16K 31/145, E03C 1/042, F16K 31/44

(54) **PILOT TYPE WATER DISCHARGING/STOPPING AND FLOW REGULATING VALVE DEVICE**

(30) Priority: 12.07.2005 JP 2005202631
(71) Applicant: INAX CORPORATION, Tokoname-shi, Aichi 479-8585 (JP)
(72) Inventor: HASHIMOTO, Mamoru, Tokoname-shi, Aichi 4798585 (JP); INOUE, Yukihiro, Tokoname-shi, Aichi 4798585 (JP)
(74) Representative: TBK-Patent
(86) International application number: PCT/JP2006/313706
(87) International publication number: WO 2007/007726

(57) **Abstract**

A pilot-type water discharging/stopping and flow regulating valve device capable of performing both the discharging/stopping of water and the regulation of flow by light operations, and capable of, once the flow is regulated, discharging the water at a pre-regulated specified flow in the next water discharge even if the water is stopped.

The pilot type water discharging/stopping and flow regulating valve device 10 has a main valve 20, a back pressure chamber 26, an introducing small hole 28, a pilot channel 30 and a flow regulating mechanism. The flow of the main channel is regulated by advancing and retreating the main valve 20 following the advance/retreat of a pilot valve 34. The valve device further has a water discharging/stopping switching mechanism that switches between the discharging and stopping of water by advancing and retreating the pilot valve 34 between a water discharge position and a water stop position. Furthermore, the flow regulating mechanism is configured to maintain the flow regulating position of the pilot valve 34 at a previously regulated flow regulating position when the water discharging/stopping switching mechanism causes the pilot valve 34 to perform water discharging operation after causing the pilot valve 34 to perform water stopping operation.

## Description

### TECHNICAL FIELD

The present invention relates to a pilot-type water discharging/stopping and flow regulating valve device arranged to discharge/stop an water and regulate a rate of flow of the water, by controlling an opening degree of an pilot channel. More particularly, the invention is concerned with such a pilot-type water discharging/stopping and flow regulating valve device capable of discharging the water by a desired rate of the flow that is previously regulated, even where the water is repeatedly discharged and stopped.

### BACKGROUND ART

Conventionally, various kinds of water taps have been used. In each of the conventional water taps, there is provided a main valve for changing an opening degree of a main channel, and a large force is required to advance/retreat the main valve toward and away from a main valve seat, so that there is a problem that operation of the water tap is heavy.
In view of this, as means for lightening the operation of the water tap, a pilot-type water discharging/stopping and flow regulating valve device may be built in the water tap, wherein the device is arranged such that the opening degree of the main channel is changed by advance/retreat of the main valve that follows advance/retreat of a pilot valve.

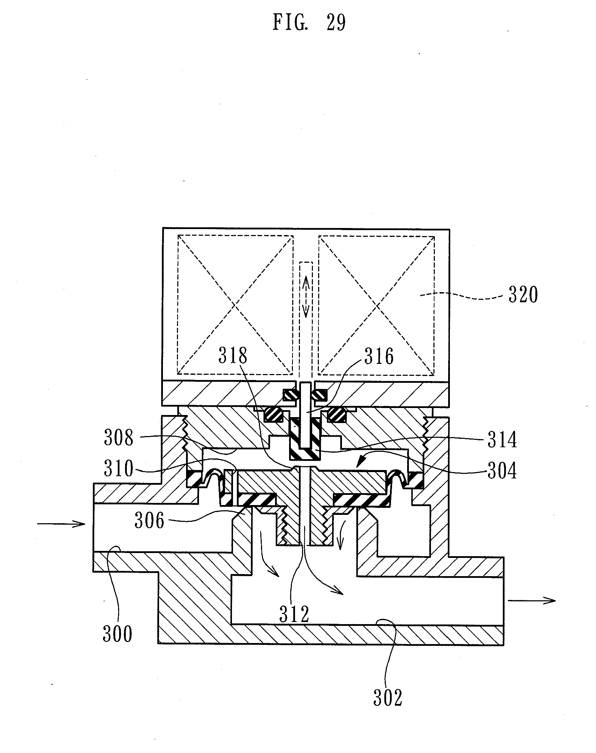

For example, Patent Document 1 identified below discloses a construction of this kind of pilot-type water discharging/stopping and flow regulating valve device. Fig. 29 shows a specific example of the device.
In this Fig. 29, reference signs 300 and 302 respectively denote an inflow channel and an outflow channel as primary and secondary side portions of the main channel. Reference sign 304 denotes a main valve which is disposed in the main channel and which is provided by a diaphragm valve.
The main valve 304 is advanced and retreated toward and away from a main valve seat 306, for changing the opening degree of the main channel, so as to regulate a rate of flow of water through the main channel, depending on the opening degree of the main channel.

Reference sign 308 denotes a back pressure chamber that is defined on a backside of the main valve 304. An internal pressure in the back pressure chamber 308 acts as a pressing force that is applied to the main valve 304 in a valve-closing direction.
The main valve 304 has an introducing small hole 310 formed therethrough such that the inflow channel 300 and the back pressure chamber 308 are in communication with each other via the introducing small hole 310.
This introducing small hole 310 introduces the water coming from the inflow channel 300, into the back pressure chamber 308, so as to increase the pressure in the back pressure chamber 308.
The main valve 304 has also a pilot channel 312 formed therethrough so as to serve as a discharge channel such that that the back pressure chamber 308 and the outflow channel 302 are in communication with each other via the pilot channel 312.
This pilot channel 312 discharges the water from the back pressure chamber 308 to the outflow channel 302, so as to reduce the pressure in the back pressure chamber 308.

Reference sign 314 denotes a pilot valve that is disposed to be movable integrally with a drive rod 316. The opening degree of the pilot channel 312 is controlled by advance/retreat of the pilot valve 314 relative to a pilot valve seat 318 in a vertical direction (as seen in the figure), i.e., in the same direction as advance/retreat of the main valve 304.
In Fig. 29, reference sign 320 denotes an electric drive device for advancing and retreating the pilot valve 314 together with the drive rod 316.

In the pilot-type water discharging/stopping and flow regulating valve device shown in Fig. 29, when the pilot valve 314 is advanced toward the pilot valve seat 318, a gap between the pilot valve 314 and the pilot valve seat 318 is reduced whereby the opening degree of the pilot channel 312 becomes small, thereby reducing a flow rate of the water discharged from the back pressure chamber 308 to the outflow channel 302 via the pilot channel 312 and accordingly increasing the pressure in the back pressure chamber 308.
On the other hand, when the pilot valve 314 is retreated upwardly (as seen in the figure), the gap between the pilot valve 314 and the pilot valve seat 318 is increased whereby the opening degree of the pilot channel 312 becomes large, thereby increasing the flow rate of the water discharged from the back pressure chamber 308 to the outflow channel 302 via the pilot channel 312 and accordingly reducing the pressure in the back pressure chamber 308.
Then, the main valve 304 is advanced and retreated in upward and downward directions (as seen in the figure), following the advance/retreat of the pilot valve 314, such that the pressure in the back pressure chamber 308 and the pressure in the inflow channel 300 are balanced with each other, whereby the opening degree of the main channel is changed.
The rate of flow of the water from the inflow channel 300 to the outflow channel 302 is regulated according to the change of the opening degree of the main channel.

Further, in this pilot-type water discharging/stopping and flow regulating valve device, the water is stopped by seating of the main valve 304 on the main valve seat 306, which is caused by seating of the pilot valve 314 on the pilot valve seat 318.
Further, the water is discharged by opening of the main channel as a result of separation of the main valve 304 from the main valve seat 306, which is caused by opening of the pilot channel 312 made by the pilot valve 314, and the rate of discharge of the water is regulated by change of the opening degree of the main channel made by the main valve 304.

In the pilot-type water discharging/stopping and flow regulating valve device shown in Fig. 29, the main valve 304 is advanced and retreated based on increase and reduction of the pressure in the back pressure chamber 308, and the increase and reduction of the pressure in the back pressure chamber 308 is controlled by the advance/retreat of the pilot valve 314. This arrangement enables the main valve 304 to be operated by a small force, thereby making it possible to discharge/stop the water and regulate the rate of the water flow by a light operation.

However, in this pilot-type water discharging/stopping and flow regulating valve device, the rate of the water flow has to be regulated each time the water discharging/stopping is carried out, so that the operation is cumbersome with a problem with respect to its operability.
That is, where a position of the pilot valve 314 has been adjusted to obtain a desired rate of the flow in the water discharging, the pilot valve 314 is necessarily moved from the adjusted position if the water stopping is carried out after the adjustment of the position of the pilot valve 314. This arrangement requires a cumbersome operation for readjusting the position of the pilot valve 314 such that the desired rate of the flow is obtained also in the next water discharging operation.
The present invention was developed for solving the above problems.

Patent Document 2 identified below discloses a device in which, in addition to the pilot valve advanced and retreated to stop and discharge the water, a flow regulator mechanism is provided to regulate a rate of flow in the water discharging operation. In the device disclosed in Patent Document 2, the opening degree of the main valve is controlled directly by the flow regulator mechanism, and a heavy operation is required upon adjustment of the water flow. Thus, the device disclosed in Patent Document 2 is different from the present invention.

[Patent Document 1] JP-H04-302790A
[Patent Document 2] JP-2001-98596A

### DISCLOSURE OF INVENTION

### OBJECT TO BE SOLVED BY THE INVENTION

The present invention was made in view of the background prior art discussed above. It is therefore an object of the present invention to provide a pilot-type water discharging/stopping and flow regulating valve device having arrangements which enable any one of water discharging operation, water stopping operation and flow-rate regulation to be carried out by a light operation and which make it possible, after the flow-rate regulation has been once carried out to obtain a desired flow rate in water discharging operation, to discharge water by the desired flow rate in the next water discharging operation even if the water stopping is carried out after the flow-rate regulation.

### MEASURE FOR ACHIEVING THE OBJECT AND EFFECTS

Claim 1 defines a pilot-type water discharging/stopping and flow regulating valve device having: (a) a main valve which is advanced and retreated relative to a main valve seat in directions toward and away from the main valve seat, so as to change an opening degree of a main channel; (b) a back pressure chamber which is defined on a back side of the main valve and which causes an internal pressure therein acts as a pressing force on the main valve in a valve-closing direction; (c) an introducing small hole which is to introduce a water from an inflow channel as a primary side portion of the main channel, into the back pressure chamber, so as to increase a pressure in the back pressure chamber; (d) a pilot channel which is formed through the main valve and which communicates the back pressure chamber and an outflow channel as a secondary side portion of the main channel, so as to discharge the water from the back pressure chamber, for thereby reducing the pressure in the back pressure chamber; (e) a flow regulating pilot valve which is to be advanced and retreated in advanced and retreated directions of the main valve, so as to control an opening degree of the pilot channel; and (f) a flow regulating mechanism which is to advance and retreat the flow regulating pilot valve, so as to determine a flow regulating position according to an amount of advance/retreat movement, for thereby performing flow regulating, wherein a flow rate of the water flowing through the main channel is regulated by causing the main valve to be advanced and retreated following the advance/retreat movement of the flow regulating pilot valve, the pilot-type water discharging/stopping and flow regulating valve device being characterized in that there are provided a water discharging/stopping pilot valve for opening and closing the pilot channel and a water discharging/stopping switching mechanism for advancing and retreating the water discharging/stopping pilot valve between a water stop position for closing the pilot channel and a water discharge position for opening the pilot channel, so as to switch between water discharging and stopping, and in that the flow regulating mechanism is configured to maintain the flow regulating position of the flow regulating pilot valve in a flow regulating position that is previously adjusted, when the water discharging/stopping pilot valve performs water discharging operation after performing water stopping operation by the water discharging/stopping switching mechanism.

Claim 2 defines pilot-type water discharging/stopping and flow regulating valve device according to claim 1, being characterized in that the flow regulating pilot valve and the water discharging/stopping pilot valve are disposed separately from each other, and in that the flow regulating mechanism and the water discharging/stopping switching mechanism are configured to advance/retreat the flow regulating pilot valve and the water discharging/stopping pilot valve, respectively, independently of each other.

Claim 3 defines the pilot-type water discharging/stopping and flow regulating valve device according to claim 1, being characterized in that the flow regulating pilot valve and the water discharging/stopping pilot valve are constituted by a common pilot valve, and in that the flow regulating mechanism is configured to move the water stop position of the common pilot valve according to the adjusted flow regulating position, while the water discharging/stopping switching mechanism is configured to advance/retreat the common pilot valve between the adjusted flow regulating position as the water discharge position and the moved water stop position.

Claim 4 defines the pilot-type water discharging/stopping and flow regulating valve device according to claim 3, being characterized in that the common pilot valve is disposed in a drive rod that is expandable and contractable, and in that the flow regulating mechanism is configured to axially move a position of an entirety of the common pilot valve by causing the drive rod to be expanded and contracted, for thereby moving the flow regulating position and the water stop position of the common pilot valve.

Claim 5 defines the pilot-type water discharging/stopping and flow regulating valve device according to claim 4, being characterized in that the drive rod is axially divided into two divided axial portions one of which is provided with the common pilot valve such that the two divided axial portions are held in thread-engagement with each other and in that the drive rod is expanded and contracted by advance/retreat movement of the one of the divided axial portions, which is caused by a screw feed as a result of rotation of the other of the divided axial portions made by a rotary operating member.

Claim 6 defines the pilot-type water discharging/stopping and flow regulating valve device according to any one of claims 1-5, being characterized in that the water discharging/stopping switching mechanism has a lock mechanism configured to alternately switch the water discharging/stopping pilot valve between the water discharge position and the water stop position and to hold the water discharging/stopping pilot valve in the position.

### EFFECTS AND ADVANTAGES OF THE INVENTION

According to the present invention, as described above, there are provided the flow regulating valve for performing the flow-rate regulation and the water discharging/stopping pilot valve for performing the water discharging operation and the water stopping operation by opening and closing the pilot channel, such that each of the water discharging/stopping pilot valve and the flow regulating pilot valve can be advanced and retreated by a corresponding one of the water discharging/stopping switching mechanism and the flow regulating mechanism, and such that the flow regulating mechanism is configured to maintain the flow regulating position of the flow regulating pilot valve in the previously adjusted flow regulating position irrespective of the water discharging operation and the water stopping operation performed by the water discharging/stopping pilot valve through the water discharging/ stopping switching mechanism. The arrangement of the present invention enables any one of water discharging operation, water stopping operation and flow-rate regulation to be carried out by a light operation owing to the control of the opening degree of the pilot channel, and makes it possible, even after the water discharging and stopping operations have been performed by the water discharging/stopping pilot valve through the water discharging/stopping switching mechanism, to maintain the flow regulating position of the flow regulating pilot valve in a previously adjusted position, i.e., a flow regulating position that has been already set, upon the water discharging operation. Therefore, this arrangement facilitates the operations of the device and improves the operability of the device, without requiring the water discharge rate to be readjusted to a desired rate, which is a cumbersome operation, each time after the water discharging and stopping operations have been performed.

In the present invention, the flow regulating pilot valve and the water discharging/stopping pilot valve may be disposed separately from each other, so that the flow regulating mechanism and the water discharging/stopping switching mechanism can advance/retreat the flow regulating pilot valve and the water discharging/stopping pilot valve, respectively, independently of each other (claim 2).

On the other hand, as recited in claim 3, the flow regulating pilot valve and the water discharging/stopping pilot valve may be constituted by the common pilot valve, such that the flow regulating mechanism is configured to move the water stop position of the common pilot valve according to the adjusted flow regulating position, while the water discharging/stopping switching mechanism is configured to advance/retreat the common pilot valve between the adjusted flow regulating position and the moved water stop position.

According to claim 3, it is possible to cause the common pilot valve to serve as either the flow regulating pilot valve and the water discharging/stopping pilot valve, so that the construction of the device can be simplified and the device can be made compact in size owing to the simplified construction.
In this case, a pilot valve seat having an annular shape may be provided on the side of the main valve and disposed about an axis of the main valve or an axis parallel to the axis of the main valve, so that the common pilot valve can be fitted in the pilot valve seat, axially movably relative to the pilot valve seat.
This arrangement makes it to possible to easily move the water stop position of the common pilot valve in its axial direction.

Further, according to claim 3, the common pilot valve may be disposed in the drive rod that is expandable and contractable, such that the flow regulating mechanism is configured to axially move the position of the entirety of the common pilot valve by causing the drive rod to be expanded and contracted, for thereby making it possible to move the flow regulating position of the common pilot valve and the water stop position (claim 4).
This arrangement makes it possible to easily move the water stop position of the common pilot valve and also to easily move the flow regulating position in the direction of axis of the drive rod. That is, the water discharge rate can be easily regulated.
Therefore, the construction of the device can be simplified and the device can be made compact in size owing to the simplified construction.

In this case, the drive rod may be axially divided into two divided axial portions one of which is provided with the common pilot valve such that the two divided axial portions are held in thread-engagement with each other, so that the drive rod can be expanded and contracted by advance/retreat of the one of the divided axial portions, which are caused by the screw feed as a result of rotation of the other of the divided axial portions made by the rotary operating member (claim 5).
This arrangement permits the rotary operating member such as a handle and the drive rod to be disposed coaxially with each other, whereby the construction of the device can be made further compact in size and the drive rod can be easily expanded and contracted by a simple construction.

Further, in the present invention, the water discharging/stopping switching mechanism may have the lock mechanism configured to alternately switch the water discharging/stopping pilot valve between the water discharge position and the water stop position and to hold the water discharging/stopping pilot valve in the position (claim 6).
This arrangement makes it possible to easily perform the water discharging and stopping operations. Further, the arrangement provides an advantage that the water discharging and stopping operations do not have to be continued since the water discharge state and the water stopping state are maintained even if the operational force is released after the water discharging and stopping operations.

### BRIEF DESCRIPTION OF DRAWINGS

[Fig. 1] A cross sectional view showing a pilot-type water discharging/stopping and flow regulating valve device as an embodiment of the present invention, together with a water tap.
[Fig. 2] A cross sectional view showing in enlargement a major portion of Fig. 1.
[Fig. 3] An exploded perspective view showing a major portion of the pilot-type water discharging/stopping and flow regulating valve device.
[Fig. 4] Views for explaining effects provided by a thrust lock mechanism of a water discharging/stopping switching mechanism in the pilot-type water discharging/stopping and flow regulating valve device.
[Fig. 5] Views for explaining effects upon flow-rate regulation in the embodiment of the invention.
[Fig. 6] Explaining views following Fig. 5.
[Fig.7] Cross sectional views showing a water discharging state and a water stopping state of the pilot-type water discharging/stopping and flow regulating valve device, wherein a high rate of water flow is established in the water discharging state.
[Fig. 8] Cross sectional views showing the water discharging state and the water stopping state of the pilot-type water discharging/stopping and flow regulating valve device, wherein a low rate of water flow is established in the water discharging state.
[Fig. 9] A view showing another embodiment of the present invention.
[Fig. 10] Views showing in enlargement a major portion of Fig. 9.
[Fig. 11] A view showing Fig. 9 in a valve open state.
[Fig. 12] A cross sectional view showing a major portion of a still another embodiment of the present invention.
[Fig. 13] An exploded perspective view showing a major portion of the pilot-type water discharging/stopping and flow regulating valve device of Fig. 12.
[Fig. 14] Views showing a rotor in the embodiment of the invention.
[Fig. 15] A view showing a sleeve and a forced rotation ring in the embodiment of the invention.
[Fig. 16] A perspective view showing construction of an O-ring receiving portion in the embodiment of the invention, as seen in a state of removal of a cap.
[Fig. 17] Views for explaining effects provided by a main valve guide 172 in the embodiment of the invention.
[Fig. 18] Views for explaining in the embodiment of the invention, which are different from those of Fig. 17.
[Fig. 19] Views for explaining in the embodiment of the invention, which are different from those of Figs. 17 and 18.
[Fig. 20] A graph showing a relationship between an amount of movement of the main valve and a rate of water flow.
[Fig. 21] Cross sectional views showing a major portion of a still another embodiment of the invention.
[Fig. 22] An exploded perspective view showing the major portion of Fig. 21.
[Fig. 23] An exploded perspective view for explaining a state in which components are assembled in the embodiment of the invention.
[Fig. 24] A view for explaining a state in which components different from those of Fig. 23 are assembled.
[Fig. 25] A cross sectional view for explaining a state in which components different from those of Figs. 23 and 24 are assembled.
[Fig. 26] Views for explaining effects in the embodiment of the invention.
[Fig. 27] Views showing a major portion of a still another embodiment of the present invention.
[Fig. 28] Views showing a transmitting member in the embodiment of the invention.
[Fig. 29] A view for a conventional pilot-type water discharging/stopping and flow regulating valve device.

### DESCRIPTION OF REFERENCE SIGNS

- 16:: inflow channel
- 18:: outflow channel
- 20:: main valve
- 25:: main valve seat
- 26:: back pressure chamber
- 28:: introducing small hole
- 30:: pilot channel
- 34:: pilot valve
- 60:: drive rod
- 62:: first axial portion
- 64:: second axial portion
- 66:: internal thread
- 70:: external thread
- 80:: drive ring
- 82:: sleeve
- 84:: rotor
- 126:: flow regulating pilot valve
- 128:: water discharging/stopping pilot valve

### BEST MODES FOR CARRYING OUT THE INVENTION

There will be described in detail an embodiment of the present invention, with reference to the drawings.

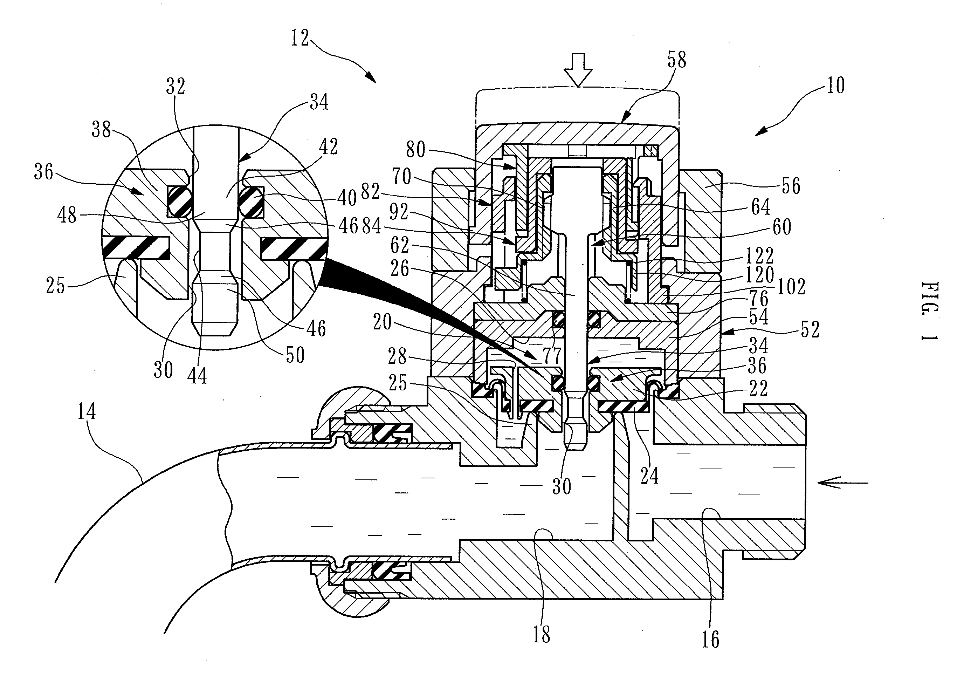

In Fig. 1, reference sign 10 denotes a pilot-type water discharging/stopping and flow regulating valve device, while reference sign 12 denotes a water tap incorporating therein the pilot-type water discharging/stopping and flow regulating valve device 10.
Reference sign 14 denotes a discharge tube having, in its distal end, a discharge port through which water is discharged.
Reference signs 16 and 18 respectively denote an inflow channel and an outflow channel as primary and secondary side portions of a main channel in the pilot-type water discharging/stopping and flow regulating valve device 10, i.e., a main channel in the water tap 12. Reference sign 20 denotes a main valve which is provided by a diaphragm valve and which is disposed on the main channel.

The main valve 20 consists of a main valve body 22 made of a hard material and a diaphragm 24 made of a rubber and held by the main valve body 22.
This main valve 20 is advanced and retreated relative to a main valve seat 25 in a vertical direction (as seen in the figure) so as to open/close the main channel and change an opening degree of the main channel.
Described in detail, the main channel is closed by seating of the main valve 20 on the main valve seat 25, and is open by separation of the main valve 20 from the main valve seat 25 in an upward direction (as seen in the figure).
Further, the opening degree of the main channel is increased/reduced depending on an amount of separation of the main valve 20 from the main valve seat 25, so as to regulate a rate of water flowing through the main channel, i.e., a rate of water discharged through the discharge port of the discharge tube 14.

A back pressure chamber 26 is defined on a backside of the main valve 20, i.e., on an upper side of the main valve 20 (as seen in the figure).
An internal pressure in the back pressure chamber 26 acts as a pressing force that is applied to the main valve 20 in a valve-closing direction, i.e., a downward direction (as seen in the figure).
The main valve 20 has an introducing small hole 28 formed therethrough such that the inflow channel 16 (as the primary side portion of the main channel) and the back pressure chamber 26 are in communication with each other via the introducing small hole 28.
This introducing small hole 28 introduces the water coming from the inflow channel 16, into the back pressure chamber 26, so as to increase the pressure in the back pressure chamber 26.

The main valve 20 has also a pilot channel 30 formed therethrough so as to serve as a discharge channel such that that the back pressure chamber 26 and the outflow channel 18 (as the secondary side portion of the main channel) are in communication with each other via the pilot channel 30.
This pilot channel 30 discharges the water from the back pressure chamber 26 to the outflow channel 18, so as to reduce the pressure in the back pressure chamber 26.

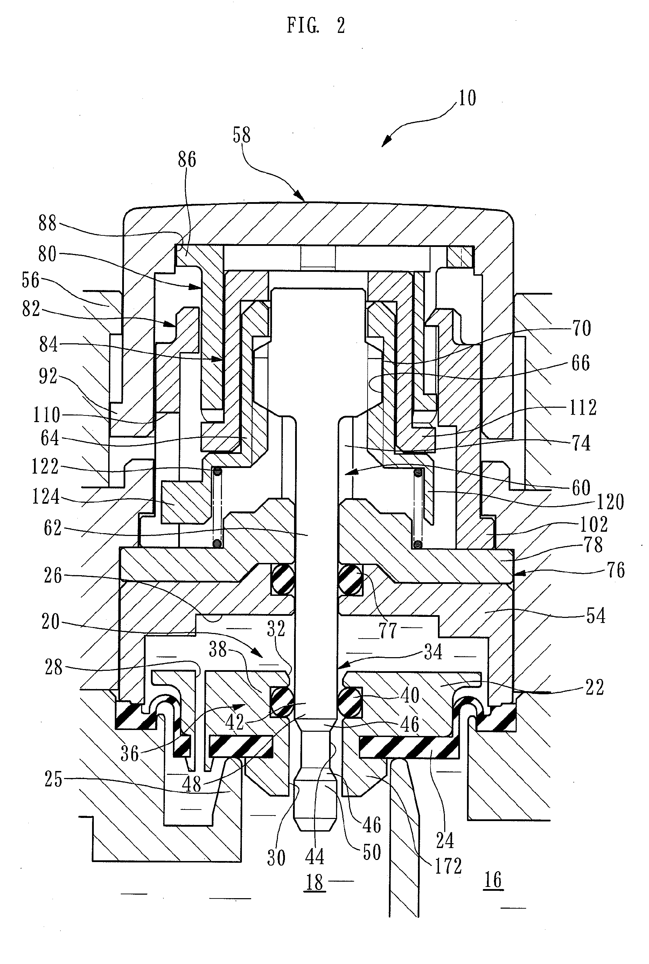

As shown in Fig. 2, the main valve 20 has a through-hole 32 located in its central portion and extending in an axial direction. The through-hole 32 receives therein a pilot valve 34 serving commonly as a water discharging/stopping pilot valve and a flow regulating valve. The pilot channel 30 is defined between an outer circumferential surface of the pilot valve 34 and an inner circumferential surface of the through-hole 32, so as to have an annular shape with a small channel width.
The main valve 20 is integrally provided with a pilot valve seat 36 that has an annular shape extending around an axis of the main valve 20 along the inner circumferential surface of the through-hole 32.
Reference sign 38 denotes a seal portion of this pilot valve seat 36, and holds an elastic seal ring in the form of an O ring 40 having an annular shape and received in an annular groove.

The pilot valve 34 is fitted with the pilot valve seat 36, such that the pilot valve 34 can be advanced and retreated along the axis of the main valve 20 relative to the main valve seat 36 in a vertical direction (as seen in the figure).
Described in detail, the pilot valve 34 has a circular cross sectional shape, and includes a seal portion 42 having a constant outside diameter as viewed in the vertical direction (as seen in the figure), i.e., advanced and retreated directions and an annular recessed portion 44 located on a lower side of the seal portion 42 (as seen in the figure).
Each of axially opposite end portions of the annular recessed portion 44 is provided by a tapered surface 46 whose diameter is gradually reduced toward a minimum diameter portion of the recessed portion 44. The tapered surface 46 has a large-diameter side end portion that is provided by a corresponding one of stepped portions 48, 50 extending diametrically outwardly.

Fig. 2 shows a state in which the pilot valve 34 is placed in its water stop position. In this state, the pilot valve 34 is held in elastic contact at an entire circumference of its seal portion 42, with the pilot valve seat 36 via the O ring 40 in a diametrical direction, for thereby fluid-tightly sealing between the pilot valve 34 and the pilot valve seat 36.
Further, in this state, the main valve 20 is seated on the main valve seat 25 so that the main channel is held in a closed state.

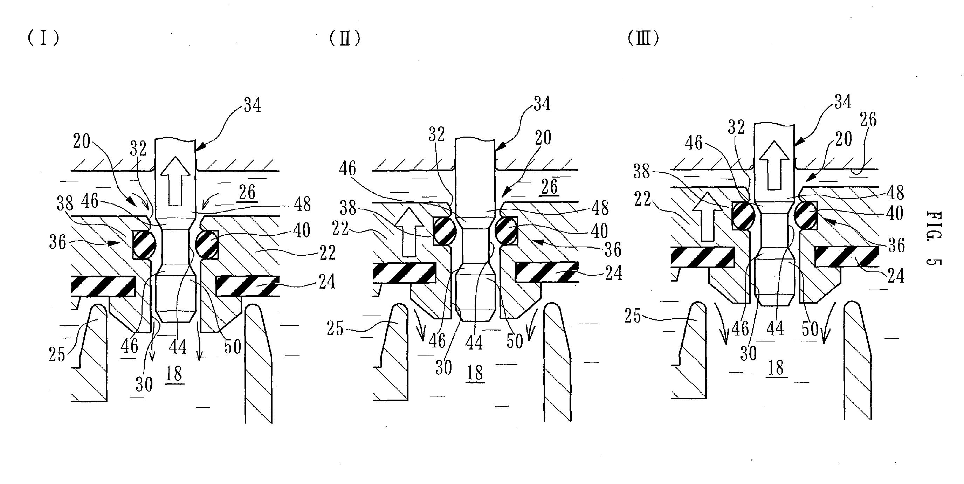

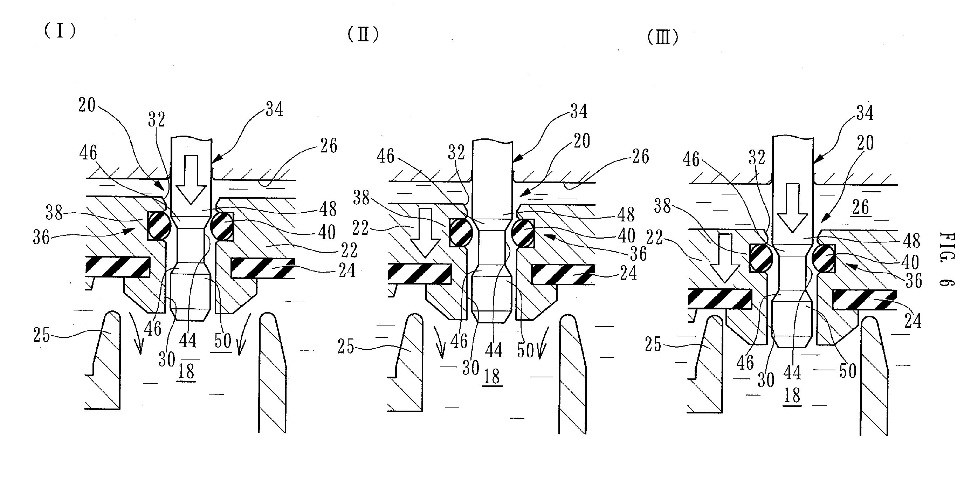

Figs. 5 and 6 show effects during flow-rate regulation performed by movement of the pilot valve 34.
In this embodiment, during the flow-rate regulation, the pilot valve 34 does not close the pilot channel 30, but changes the opening degree of the pilot channel 30 by its movement.
To this end, an amount of rotating operation of a handle 58 (described below) is limited.

In this embodiment, when the pilot valve 34 is retreated upwardly (as seen in the figure), as shown in Fig. 5 (I), a gap between the pilot valve 34 and the pilot valve seat 36 becomes large, so that the water within the back pressure chamber 26 is discharged by a high rate toward the outflow channel 18 via the pilot channel 30 whereby the pressure in the back pressure chamber 26 is reduced.
In this instance, owing to pressure difference between the back pressure chamber 26 and the inflow channel 16, the main valve 20 is retreated upwardly (as seen in the figure), and then stopped in a position that causes the pressure in the inflow channel 16 and the pressure in the back pressure chamber 26 to be balanced with each other, as shown in Fig. 5 (II).

As a result of the retreat movement of the main valve 20, a gap between the main valve 20 and the main valve seat 25 is made large, thereby increasing the flow rate of the water flowing from the inflow channel 16 to the outflow channel 18.

When the pilot valve 34 is retreated further upwardly (as seen in the figure), the main valve 20 is retreated following the retreat movement of the pilot valve 34 so as to cause the pressure in the inflow channel 16 and the pressure in the back pressure chamber 26 to be balanced with each other, thereby further increasing the opening degree of the main channel and accordingly increasing the flow rate of the water flowing through the main channel (see Fig. 5 (III)).

On the other hand, when the pilot valve 34 is advanced downwardly (as seen in the figure), as shown in Fig. 6 (I), the gap between the pilot valve 34 and the pilot valve seat 36 (described more in detail, the gap between the seal portion 42 of the pilot valve 34 and the O ring 40 held by the pilot valve seat 36) becomes small, namely, the opening degree of the pilot channel 30 become small, so that the flow rate of the water discharge from the back pressure chamber 26 toward the outflow channel 18 is reduced whereby the pressure in the back pressure chamber 26 is increased.

By the increased pressure in the back pressure chamber 26, the main valve 20 is advanced downwardly (as seen in the figure) and is stopped in a position causing the pressure in the back pressure chamber 26 and the pressure in the inflow channel 16 to be balanced with each other.
In this instance, the gap between the main valve 20 and the main valve seat 25 becomes small, namely, the opening degree of the main channel becomes small, thereby reducing the flow rate of the water flowing through the main channel (see Fig. 6 (II)).

When the pilot valve 34 is advanced downwardly (as seen in the figure) further from this state, the opening degree of the main channel becomes more small, thereby further reducing the flow rate of the water flowing through the main channel (see Fig. 6 (III)).

In Fig. 1, reference sign 52 denotes a housing incorporated in the pilot-type water discharging/stopping and flow regulating valve device 10. The housing 52 incorporates a back-pressure chamber defining member 54 that is built therein.
This back-pressure chamber defining member 54 has an inverted cup-like shape, and defines the back pressure chamber 26 therein.
This back-pressure chamber defining member 54 serves also as a main valve presser.
On an upper side of the housing 52, a holding member 56 is fixedly disposed to hold the below-described handle 58 that is of a pushbutton type.
It can be considered that this holding member 56 is also a part of the housing 52.

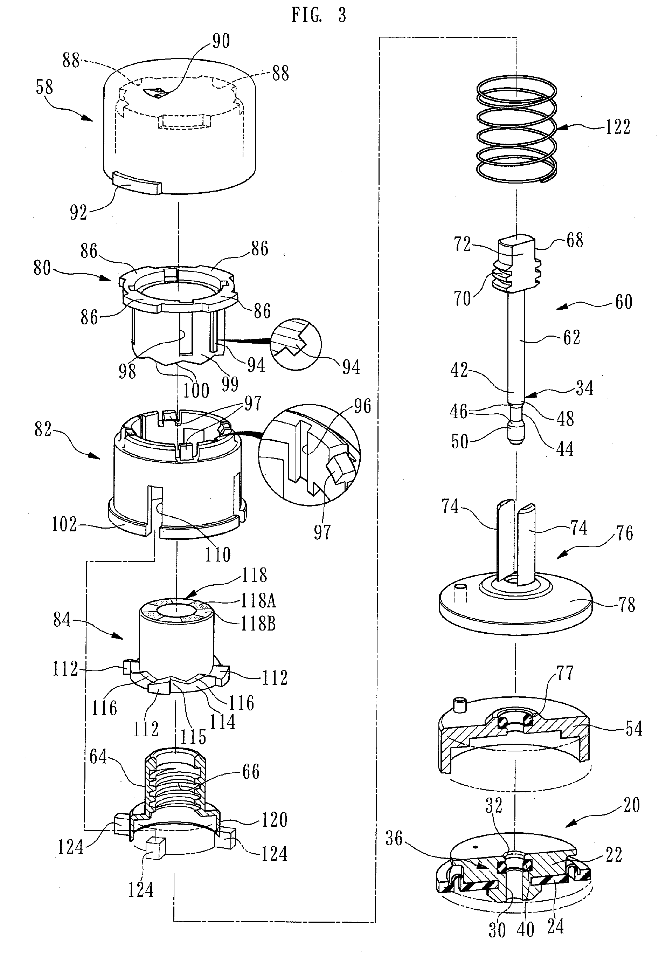

In Fig. 1, reference sign 60 denotes a drive rod. This drive rod 60 is axially divided into two portions, i.e., a first axial portion 62 and a second axial portion 64. The first axial portion 62 as a control rod portion has a constant circular cross section and a constant outside diameter, and extends in the axial direction. The second axial portion 64 has a tubular shape.
The above-described pilot valve 34 is provided by a distal end portion of the first axial portion 62 serving as the control rod portion.
The tubular second axial portion 64 is provided with an internal thread 66 formed in its inner circumferential surface, as shown in Fig. 3.
Meanwhile, the first axial portion 62 has, in its upper end portion, a protruding portion 68 that protrudes radially. The protruding portion 68 has an outer circumferential surface that is provided with an external thread 70.
The external thread 70 of the first axial portion 62 is held in thread engagement with the internal thread 66 of the second axial portion 64.
In the drive rod 60, the first axial portion 62 is advanced and retreated in the vertical direction (as seen in the figure) by a screw-feed effect provided by the internal thread 66 and the external thread 70.
That is, the drive rod 60 as a whole is expanded and contracted, owing to a screw feed provided by the internal thread 66 and the external thread 70.

The protruding portion 68 of the first axial portion 62 is formed with engaging surfaces 72 that are provided by flat surfaces parallel to each other. The engaging surfaces 72 are gripped by a pair of gripping pieces 74 of a rotation preventing member 76, so that rotation of the first axial portion 62 is prevented by gripping effect of the gripping pieces 74.
That is, owing to the rotation preventing effect provided by the rotation preventing member 76, the first axial portion 62 is advanced and retreated in the vertical direction (as seen in the figure) by rotation of the second rod portion 64.

As a result of the advance/retreat of the first axial portion 62 in the vertical direction (as seen in the figure), the pilot valve 34 integrally provided by the distal end portion of the first axial portion 62 is advanced and retreated in the vertical direction (as seen in the figure), whereby the position of the pilot valve 34 is displaced in the same direction.
As shown in Fig. 2, an O ring 77 is provided to fluid-tightly seal between the first axial portion 62 and the back pressure chamber 26.
Further, as shown in Fig. 3, the rotation preventing member 76 has a circular-shaped base portion 78 fixed to the back-pressure chamber defining member 54 that is located on a lower side of the base portion 78.

The handle 58 is a member that can be operatively pressed downwardly (as seen in the figure) and rotated. A flow regulating mechanism and a water discharging/stopping switching mechanism are incorporated between the handle 58 and the drive rod 60, more specifically, between the handle 58 and the second axial portion 64. The flow regulating mechanism is arranged to expand and contract the drive rod 60 by the screw feed that is caused based on an amount of the rotating operation of the handle 58, so as to advance/retreat the pilot valve 34 in the vertical direction (as seen in the figure), for thereby changing position of the pilot valve 34. The water discharging/stopping switching mechanism is arranged to vertically advance/retreat the drive rod 60, i.e., the pilot valve 34 provided by the distal end portion of the drive rod 60 within a certain stroke distance, so as to move the pilot valve 34 between the water discharge portion as an elevated position and the water stop position as a lowered position, and so as to hold the pilot valve 34 in the water discharge position and the water stop position.
The water discharging/stopping switching mechanism is provided with a thrust lock mechanism for switching the pilot valve 34 between the water discharge position and the water stop position and for holding the pilot valve 34 in the discharge and stop positions.

Fig. 3 shows specific constructions of the flow regulating mechanism and the water discharging/stopping switching mechanism.
In this figure, reference sign 80 denotes a tubular-shaped drive ring, reference sign 82 denotes a sleeve that holds the drive ring 80 located on an inner side thereof, and reference sign 84 denotes a tubular-shaped rotor that is rotated by the drive ring 80.

The drive ring 80 has an outwardly extending flange portion located in its upper end portion (as seen in the figure), and engaging protrusion portions 86 located in respective parts of the flange portion and protruding outwardly in the radial direction. The engaging protrusion portions 86 are engaged with respective engaging recessed portions 88 provided inside the inverted cup-like shaped handle 58 that is provided by a tubular-shaped member having a bottom wall. By the effect of the engagement of the engaging protrusion portions 86 and the engaging recessed portions 88, the drive ring 80 is rotatable integrally with the handle 58.
The handle 58 has, in its top surface, an indicator window 90 for indicating the water discharging state or water stopping state.
Further, the handle 58 has, in its lower end portion, a protrusion 92 for preventing removal of the handle 58.
As shown in Figs. 1 and 2, the removal-preventing protrusion 92 is to be engaged with an inwardly extending flange portion that is provided by an upper end portion of the holding member 56, so as to prevent removal of the handle 58.

A protrusions 94 is provided on an outer circumferential surface of the drive ring 80, so as to be fitted in a recess 96 provided in an inner circumferential surface of the sleeve 82, whereby the drive ring 80 is positioned relative to the sleeve 82 in a rotating direction.
On the outer circumferential surface of the drive ring 80, a recess 98 is provided in a position that is circumferentially different from a position of the protrusion 94. This recess 98 is to be engaged at its bottom portion with a claw 97 which is provided on an upper end portion of the sleeve 82 and which inwardly protrudes, whereby the drive ring 80 is prevented from being removed from the sleeve 82 in the upward direction (as seen in the figure).
Further, the drive ring 80 has, in its lower end portion, a corrugated-shaped engaging teeth 99 that are arranged in a circumferential direction.
The engaging teeth 99 have lower surfaces that provide cam surfaces 100 for causing the rotor 84 to be rotated by a cam effect as a result of vertical movement of the drive ring 80.

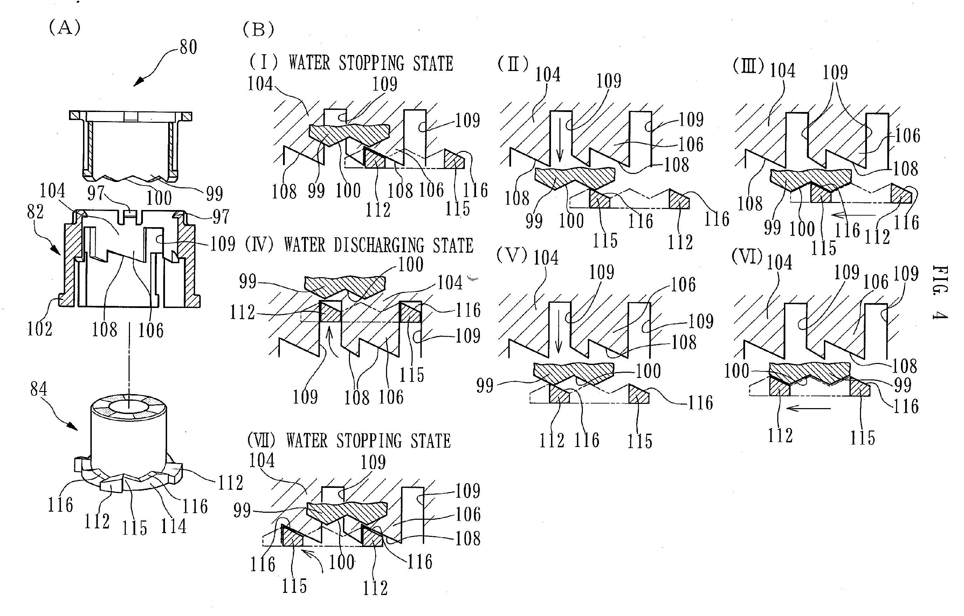

The above-described sleeve 82 has an outwardly-extending flange portion 102 in its lower end portion, so that the sleeve 82 is prevented by the flange portion 102, from being removed upwardly (as seen in the figure) from the housing 52, as shown in Figs. 1 and 2.
As shown in Fig. 4 (A), a guide portion 104 is provided in an upper portion of an inner circumferential surface of the sleeve 82, so as to protrude inwardly.
The guide portion 104 has engaging teeth 106 in its lower portion.
The engaging teeth 106 have lower surfaces that provide cam surfaces 108 for causing the rotor 84 to be rotated by a cam effect.
In the guide portion 104, there are formed fitting grooves 109, which are arranged at a predetermined spacing interval in a circumferential direction and which extend in a vertical direction.

As shown in Fig. 3, a plurality of fitting grooves 110 are provided in the sleeve 82, such that the fitting grooves 110 are arranged at a predetermined at a predetermined spacing interval in a circumferential direction and which extend vertically (as seen in the figure).
The rotor 84 has an outwardly-extending flange portion 114 in its lower end portion. A plurality of protruding portions 112 are provided in the flange portion 114, so as to be circumferentially arranged.
Engaging teeth 115 are provide by an upper portion of the flange portion 114 including the protruding portions 112.
The engaging teeth 115 have lower surfaces that provide cam surfaces 116 for causing the rotor 84 to be rotated by a cam effect as a result of vertical movement of the drive ring 80.

On an upper surface of the rotor 84, there is provided an indicator portion 118 for indicating the water discharging state and water stopping state.
The indicator 118 consists of an indication 118A indicating the water discharging state and an indication 118B indicating the water stopping state.
The indication 118A or indication 118B of the indicator portion 118 is positioned in the indicator window 90 that is provided in the upper surface of the handle 58, so as to indicate the water discharging state or water stopping state.

The rotor 84 is allowed to be elevated to an elevated position when the protruding portions 112 are fitted in the fitting grooves 109 formed in the above-described guide portion 104, and is inhibited from being elevated when the protruding portions 112 are offset from the fitting grooves 109 in the rotating direction.

As shown in Fig. 3, the second axial portion 64 of the above-described drive rod 60 has a large diameter portion 120 in its lower end portion. As shown in Fig. 2, the large diameter portion 120 has an upper surface in the form of a stepped surface that is in contact with a lower surface of the rotor 84.
A spring 122 is accommodated at its upper portion inside the large diameter portion 120, so that a biasing force of the spring 122 is applied to the second axial portion 64 in the upward direction.
As shown in Fig. 3, a plurality of fitting protrusions 124 are provided on an outer circumferential surface of the large diameter portion 120, so as to be arranged at a predetermined spacing interval in the circumferential direction.
The fitting protrusions 124 are fitted in the respective fitting grooves 110 of the sleeve 82, so that the second axial portion 64 is positioned relative to the sleeve 82 in the rotating direction.
That is, the second axial portion 64 is connected to the handle 58 via the sleeve 82 and the drive ring 80, so as to be rotatable integrally with the handle 58.

In the present embodiment, when the handle 58 is operatively rotated, the rotary motion of the handle 58 is transmitted to the second axial portion 64 via the drive ring 80 and the sleeve 82, whereby the second axial portion 64 is rotated.
The rotation of the second axial portion 64 causes the drive rod 60 to be expanded and contracted, owing to the screw-feed effect provided by the internal thread 66 of the second axial portion 64 and the external thread 70 of the first axial portion 62, whereby the first axial portion 62 is advanced and retreated in the vertical direction (as seen in the figure).
That is, the pilot valve 34 integrally provided by the end portion of the first axial portion 62 is advanced and retreated by a distance corresponding to an amount of rotation of the handle 58, so that the position of the pilot valve 34 is shifted in the vertical direction.

On the other hand, each time when the handle 58 is operatively pressed in the downward direction, the drive rod 60 is elevated and lowered, i.e., advanced and retreated in the axial direction by a constant stroke distance, while keeping its expanded/contracted state constant.
The pilot channel 30 is open when the drive rod 60 is positioned in its elevated position, and is closed when the drive rod 60 is positioned in its lowered position.
That is, the elevated position corresponds to the water discharge position of the pilot valve 34, while the lowered position corresponds to the water stop position of the pilot valve 34.

Fig. 4 shows effects of a thrust lock mechanism employed in the present embodiment, by which the pilot valve 34 is switched between the water discharge position and the water stop position each time when the handle 58 is operatively pressed, and is held in the water discharge position and the water stop position.
Fig. 4 (B) (I) shows a state in which the pilot valve 34 is positioned in the lowered position, i.e., in the water stop position.
In this instance, the protruding portions 112 of the rotor 84 are positioned in respective positions that are not aligned with the respective fitting grooves 109 of the guide portion 104 in the rotating direction, while the engaging teeth 115 of the rotor 84 are held in engagement with the respective engaging teeth 106 of the guide portion 104.
When the handle 58 is operatively pressed in the downward direction in this state, the drive ring 80 and the rotor 84 together with the second axial portion 64 are moved downwardly, and the engagement of the engaging teeth 115 of the rotator 84 with the engaging teeth 106 of the guide portion 104 are released, as shown in Fig. 4 (B) (II).

Concurrently with the engagement of the engagement teeth 115 with the engagement teeth 106, the rotor 84 is rotated by a certain small angle in a direction indicated by arrow in Fig. 4 (B) (III), owing to the effect provided by the cam surfaces 116 formed in the rotor 84 per se and the cam surfaces 100 of the drive ring 80.
Then, when a pressing force applied to operatively press the handle 58 is released, the rotor 84 and the drive ring 80 together with the handle 58 and the second axial portion 64 are moved upwardly by a small distance owing to the biasing force of the spring 122. Upon contact of the engaging teeth 115 provided in the protruding portions 112 of the rotator 84 with the engaging teeth 106 of the guide portion 104, the rotor 84 is further rotated in the same direction, owing to the cam effect provided by the cam surfaces 116, 108, and the protruding portions 112 come to be fitted into the respective fitting grooves 109 of the guide portion 104, as shown in Fig. 4 (B) (IV).

Upon fitting of the protrusion portions 112 into the respective fitting grooves 109, the rotor 84 together with the second axial portion 64, drive ring 80 and handle 58 is elevated to the elevated position, owing to the biasing force of the spring 122.
In this instance, while keeping a constant contracted state, the drive rod 60 in its entirety is upwardly elevated, thereby retreating the pilot valve 34 (that is integrally provided by the distal end portion of the first axial portion 62) to the elevated position, i.e., to the water discharge position.
Thus, the main valve 20 is placed in the open state, thereby causing flow of the water through the main channel.

Next, when the handle 58 is operatively pressed again in the downward direction, as shown in Fig. 4 (B) (V), the drive ring 80 and the rotor 84 together with the second axial portion 64 are moved in the downward direction.
Then, when the protrusion portions 112 of the rotor 84 are downwardly separated from the respective fitting grooves 109 of the guide portion 104, the rotor 84 is rotated again in the direction indicated by arrow in Fig. 4 (B) (VI), by the cam effect provided by the cam surfaces 100 of the drive ring 80 and the cam surfaces 116 of the rotor 84.
Then, upon release of the operation force applied to the handle 58 in this state, the handle 58, driving ring 80 and rotor 84 together with the second axial portion 64 are moved upwardly owing to the biasing force of the spring 122, and the engaging teeth 115 of the rotor 84 are brought into contact with the engaging teeth 106 of the guide portion 104 in a certain position, whereby the rotor 84 is rotated again by a certain small angle owing to the effect of the cam surfaces 116, 108. Thus, with the engaging teeth 115 of the rotor 84 being engaged with the engaging teeth 106 of the guide portion 104, the rotor 84, drive ring 80 and handle 58 are held in respective pressed positions, i.e., lowered positions, as shown in Fig. 4 (B) (VII).
That is, the pilot valve 34 is held in the lowered position corresponding to the water stop position.

As is clear from the above description, in the present embodiment, the drive ring 80, sleeve 82, first and second axial portions 62, 64 (cooperating with each other to constitute the drive rod 60) and external and internal threads 70, 66 (provided in the respective first and second axial portions 62, 64) cooperate with one another to constitute a flow regulating mechanism for advancing and retreating the pilot valve 34 in response to rotational operation applied to the handle 58 and according to an amount of the rotational operation. Further, the drive ring 80, sleeve 82 and rotor 84 cooperate with the entirety of the drive rod 60 to constitute a water discharging/stopping switching mechanism for switching the pilot valve 34 between the water discharge position and the water stop position in response to pressing operation applied to the handle 58.

In the present embodiment, the pilot valve 34 is advanced and retreated through the water discharging/stopping switching mechanism each time when the handle 58 is operatively pressed. However, the water can be discharged by a desired flow rate that is regulated in the last water discharging operation.
That is, the pilot valve 34 is held in the previously adjusted flow regulating position as the water discharge position, so that the water can be discharged by a desired and appropriate flow rate corresponding to the previously adjusted flow regulating position.
This can be realized owing to the arrangement enabling the water stop position of the pilot valve 34 to be moved according to the previously adjusted flow regulating position.

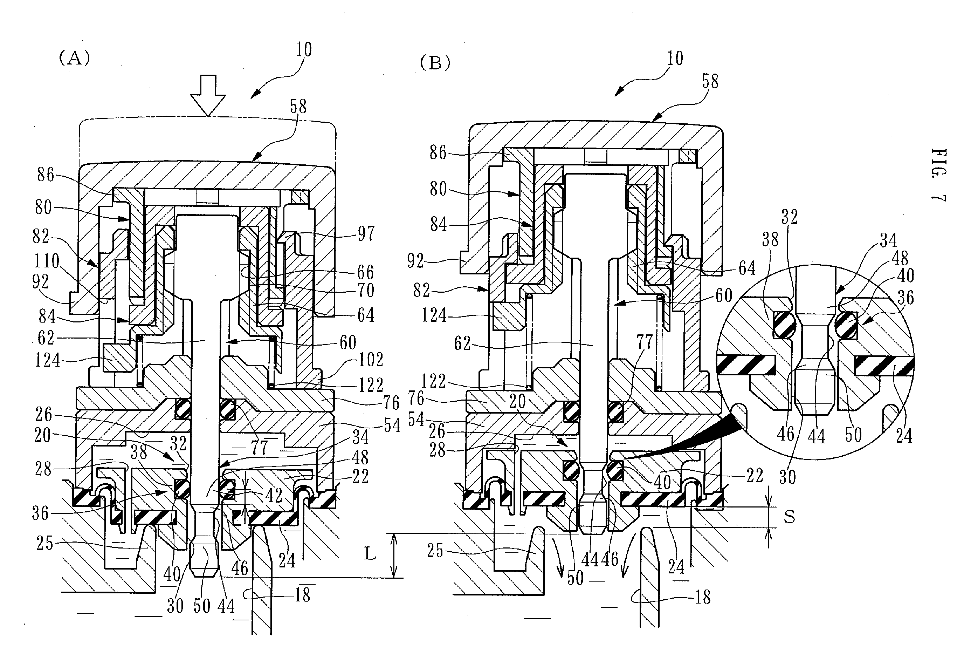

Fig. 7 (B) shows a state in which the flow regulating position of the pilot valve 34 is set such that the water is discharged by a high flow rate.
In this state, the pilot valve 34 is retreated by a large distance in the upward direction (as seen in the figure), and the main valve 20 is also retreated by a large distance in the upward direction (as seen in the figure) in response to the large retreat of the pilot valve 34, so that a large gap S is formed between the main valve 20 and the main valve seat 25 whereby the main channel is largely open.

In this state, when the handle 58 is operatively pressed, the pilot valve 34 is advanced by a certain stroke distance L, whereby the pilot channel 30 is brought into a closed state, as shown in Fig. 7 (A).
That is, the main valve 20 is seated on the main valve seat 25, so as to bring the main channel into the closed state.
In this instance, the pilot valve 34 is brought into contact, at a portion of the seal portion 42 that is close to the stepped portion 48, with the O ring 40 of the pilot valve seat 36.

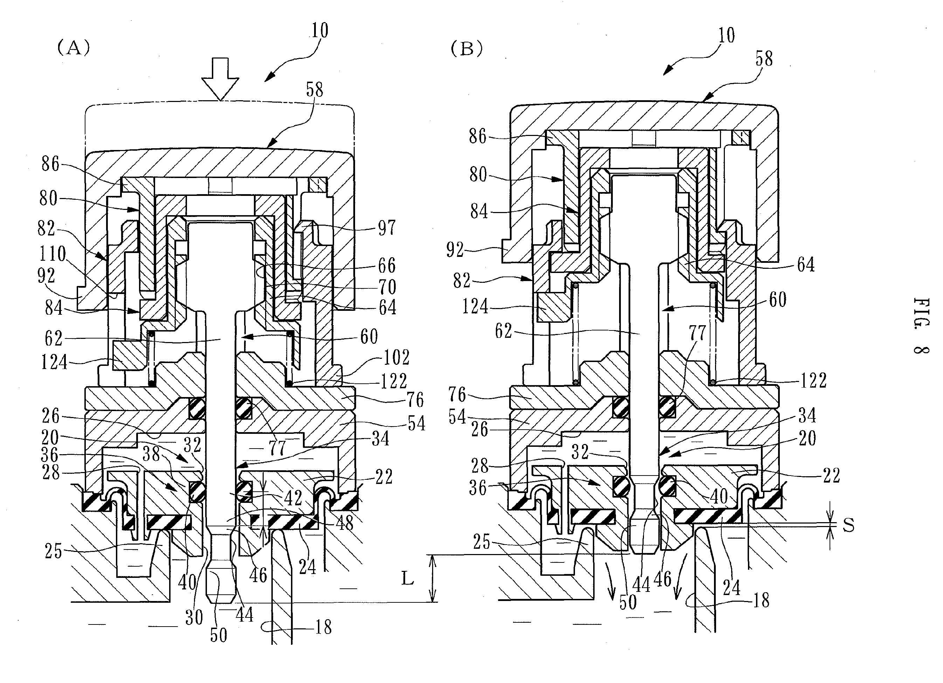

On the other hand, Fig. 8 (B) shows a state in which the pilot valve 34 is advanced to a position that is lower (as seen in the figure) than the position shown in Fig. 7 (B), namely, is advanced to a position closer to the main valve seat 25, whereby the opening degree of the main valve 20 is reduced so that the water is discharged by a low flow rate.
In this state, when the handle 58 is operatively pressed, the pilot valve 34 is advanced by a certain stroke distance L, as in the state of Fig. 7 (A), whereby the pilot channel 30 is brought into the closed state.

In this instance, the pilot valve 34 is brought into elastic contact, at a portion of the seal portion 42 that is largely distant in the upward direction (as seen in the figure) from the portion shown in Fig. 7(A), with the O ring 40 of the pilot valve seat 36, so that the pilot channel 30 is brought into the closed state..
That is, the water stop position of the pilot valve 34 is moved according to the change of the flow regulating position of the pilot valve 34 from the state of Fig. 7 (B) to the state of Fig. 8 (B).
Therefore, when the pilot valve 34 is moved from the water stopping state shown in Figs. 7 (A) and 8 (A) to the water discharge position, with the pressing operation applied to the handle 58, namely, when the water discharging state is established again, the position of the pilot valve 34 is positioned in the position shown in Figs. 7 (B) and 8 (B). That is, the flow regulating position of the pilot valve 34 is maintained in the previously adjusted flow regulating position upon the water discharging, so that the water is caused to flow toward the main channel by the previously regulated flow rate whereby the water can be discharged from the discharge port by the desired flow rate that is previously regulated.

As described above, the pilot-type water discharging/stopping and flow regulating valve device 10 of the present embodiment enables any one of water discharging operation, water stopping operation and flow-rate regulation to be carried out by a light operation owing to the control of the opening degree of the pilot channel, and makes it possible, even after the water discharging and stopping operations have been performed by the pilot valve 34 through the water discharging/stopping switching mechanism, to maintain the flow regulating position of the pilot valve 34 in a previously adjusted position, i.e., a flow regulating position that has been already set, upon the water discharging operation. Therefore, this arrangement facilitates the operations of the device and improves the operability of the device, without requiring the water discharge rate to be readjusted to a desired rate, which is a cumbersome operation, each time after the water discharging and stopping operations have been performed.

In the present embodiment, the flow regulating pilot valve and the water discharging/stopping pilot valve are constituted by the common pilot valve 34, such that the flow regulating mechanism is configured to move the water stop position of the common pilot valve 34 according to the adjusted flow regulating position, while the water discharging/stopping switching mechanism is configured to advance/retreat the common pilot valve 34 between the adjusted flow regulating position and the moved water stop position, so that the construction of the device can be simplified and the device can be made compact in size owing to the simplified construction.

Further, in the present embodiment, a pilot valve seat 36 having an annular shape is disposed about the axis of the main valve 20, so that the pilot valve 34 can be fitted in the pilot valve seat 36, axially movably relative to the pilot valve seat 36. This arrangement makes it to possible to easily move the water stop position of the pilot valve 34 in its axial direction.
Further, in the present embodiment, the pilot valve 34 is disposed in the drive rod 60 that is expandable and contractable, and the position of the entirety of the pilot valve 34 is axially moved by the screw-feed effect provided by the external thread 70 and internal thread 66 of the first and second axial portions 62, 64 of the drive rod 60, so that the water stop position of the pilot valve 34 can easily moved and the flow regulating position of the pilot valve 34 can be easily moved in the direction of the axis of the drive rod 60.
Therefore, the construction of the pilot-type water discharging/stopping and flow regulating valve device 10 can be simplified and the device can be made compact in size owing to the simplified construction. Further, the handle 58 and the drive rod 60 can be disposed coaxially with each other.

Further, in the present embodiment, the water discharging/stopping switching mechanism has the thrust lock mechanism configured to alternately switch the pilot valve 34 between the water discharge position and the water stop position and to hold the pilot valve 34 in the position. This arrangement makes it possible to easily perform the water discharging and stopping operations. Further, the arrangement provides an advantage that the water discharging and stopping operations do not have to be continued since the water discharge state and the water stopping state are maintained even if the operational force is released after the water discharging and stopping operations.

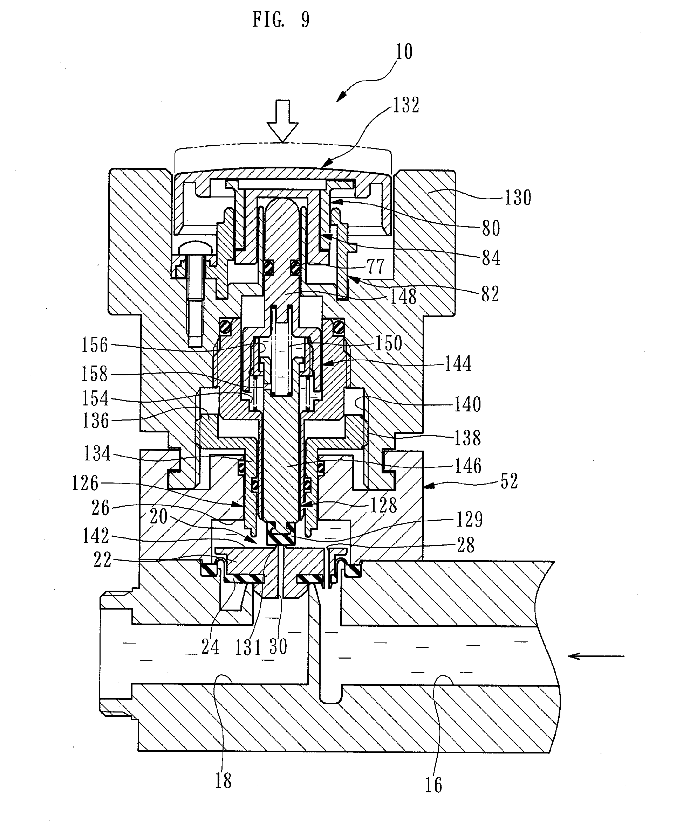

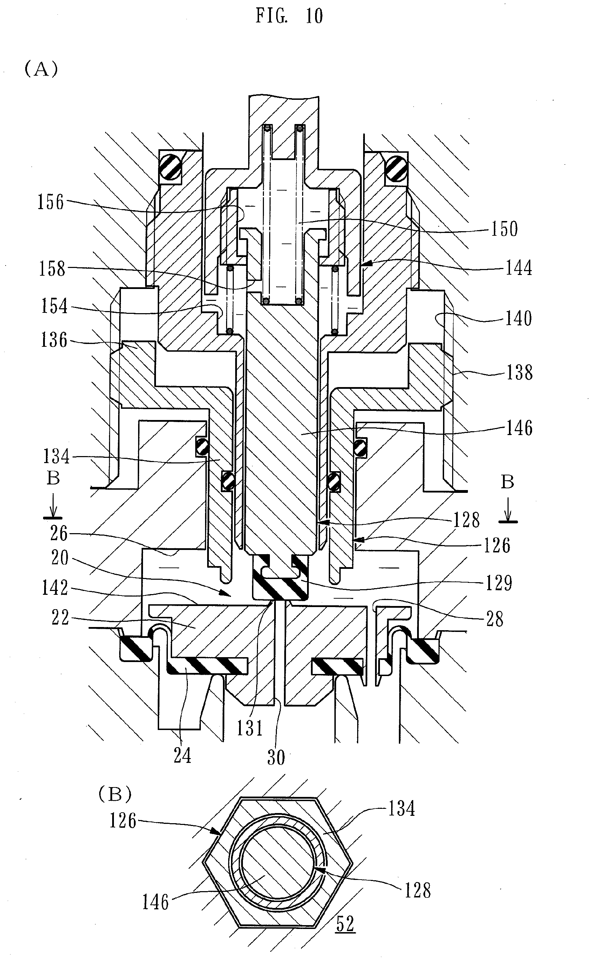

Figs. 9-11 shows another embodiment of the present invention.
As shown in Fig. 9, in this embodiment, a flow regulating pilot valve 126 and a water discharging/stopping pilot valve 128 are disposed separately from each other, and a rotary handle 130 and a pushbutton 132 are disposed separately from each other for the flow-rate regulation and the water discharging/stopping, respectively.
The flow regulating pilot valve 126 is integrally provided by a distal end portion of a sleeve 134.
The sleeve 134 has a large diameter portion 136 in its upper portion (as seen in the figure).
An external thread 138 is provided on an outer circumferential surface of the large diameter portion 136, and is held in thread-engagement with an internal thread 140 provided on an inner circumferential surface of the rotary handle 130.
It is noted that the sleeve 134 has a hexagonal shape as shown in Fig. 10 (B), and is fitted at its outer circumferential surface with a hexagonal-shaped inner circumferential surface of the housing 52, so to be unrotatable.

In this embodiment, with a rotary operation applied to the rotary handle 130, the flow regulating pilot valve 126 is advanced/retreated in a vertical direction (as seen in the figure), thereby increase/reduce a gap between the flow regulating pilot valve 126 and a pilot valve seat 131 that is provided by an upper surface 142 of the main valve 20, so as to control a flow rate of the water discharged from the back pressure chamber 26 toward the outflow channel 18, namely, so as to control the opening degree of the pilot channel 30.
It is noted that the rotary handle 130 is fixed in the vertical direction.

On the other hand, the water discharging/stopping pilot valve 128 is integrally provided by a distal end portion of a drive rod 144.
In this example, the water discharging/stopping pilot valve 128 is provided with a seal member 129, which is fluid-tightly seated on and separated from the pilot valve seat 131 provided in the main valve 20, whereby the pilot channel 30 is closed and open.

The drive rod 144 is divided into a lower axial portion 146 and an upper axial portion 148, which are elastically forced by a spring 150 in vertically opposite directions.
It is noted that the lower axial portion 146 is prevented from being removed downwardly from the upper axial portion 148 while the upper axial portion 148 receives the elastic force applied from the spring 150 and acting in the upward direction.
A chamber 154 is defined around an upper portion of the lower axial portion 146, while another chamber 154 is defined inside a portion interconnecting the lower axial portion 146 and the upper axial portion 148. The chambers 154, 156 are held in communication with the back pressure chamber 26.
The chambers 154, 156 are held in communication with each other via a communication hole 158.

In the drive rod 144, more in detail, between the upper axial portion 148 and the pushbutton 132, there are provided the drive ring 80, rotor 84 and sleeve 82 that have substantially the same constructions as described above. There is further provided a thrust lock mechanism that is configured to alternately switch the water discharging/stopping pilot valve 128 between the water discharge position and the water stop position each time when the pushbutton 132 is operatively pressed, and to hold the water discharging/stopping pilot valve 128 in the position.
However, in this embodiment, the pushbutton 132 is not operatively rotated, so that the thrust lock mechanism does not have a function of integrally rotating the upper axial portion 148 by rotation of the pushbutton 132.

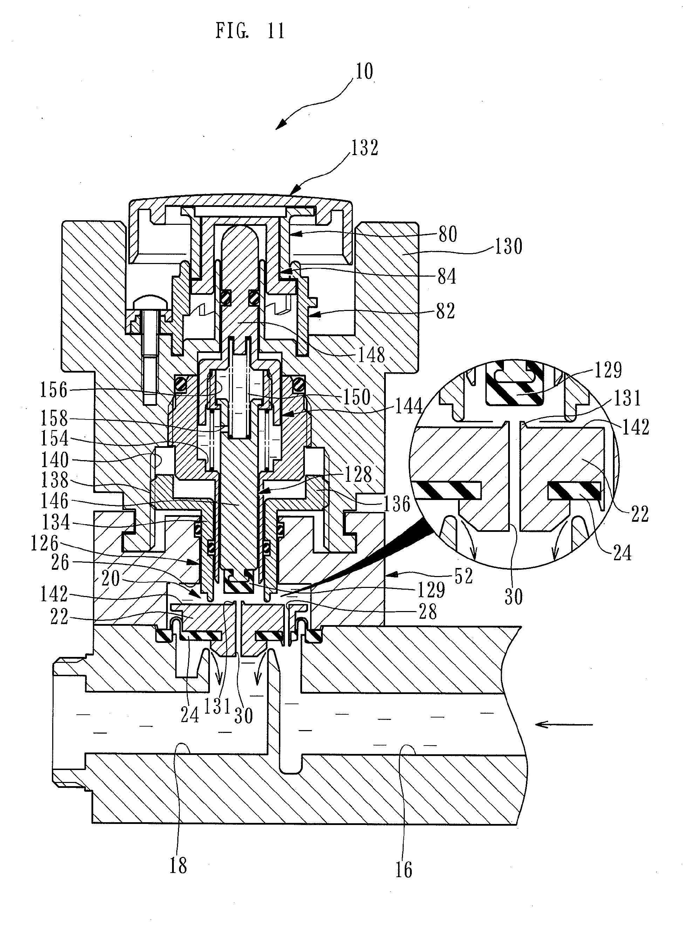

In this example, each time when the pushbutton 132 is operatively pressed, the water discharging/stopping pilot valve 128 is advanced/retreated between the water stop position shown in Figs. 9 and 10 and the water discharge position shown in Fig. 11. Further, owing to the function of the thrust lock mechanism, the water discharging/stopping pilot valve 128 is held in a selected one of the water discharge position and water stop position.

In the water discharge state shown in Fig. 11, when the rotary handle 130 is operatively rotated, the flow regulating pilot valve 126 is advanced/retreated in the vertical direction (as seen in the figure), and the position of the flow regulating pilot valve 126 is changed according to the amount of the rotary operation applied to the rotary handle 130, whereby the opening degree of the pilot channel 30 is changed.
The main valve 20 is advanced/retreated following the advance/retreat of the flow regulating pilot valve 126 such that the pressure in the back pressure chamber 26 and the pressure in the inflow channel 16 are balanced with each other, whereby the opening degree of the main channel is changed so as to regulate the flow rate of the water flowing through the main channel.
The effect in this instance is basically the same as described above.

In this embodiment, too, there is provided a stopper (not shown) for limiting the amount of the rotary operation applied to the rotary handle 130, so that the pilot channel 30 is not completely closed even when the flow regulating pilot valve 126 is positioned in the most advanced position.

In the present embodiment, the flow regulating pilot valve 126 and the water discharging/stopping pilot valve 128 are disposed separately from each other, and are advanced/retreated by the flow-rate regulation rotary handle 130 and the water discharging/stopping pushbutton 132, respectively, independently of each other, so that it is possible, even after the water discharging and stopping operations have been performed by the water discharging/stopping pilot valve 128 through the pushbutton 132, to maintain the flow regulating position of the flow regulating pilot valve 126 in a previously adjusted position, i.e., a flow regulating position that has been already set, upon the water discharging operation. Therefore, this arrangement facilitates the operations of the device and improves the operability of the device, without requiring the water discharge rate to be readjusted to a desired rate, which is a cumbersome operation, each time after the water discharging and stopping operations have been performed.

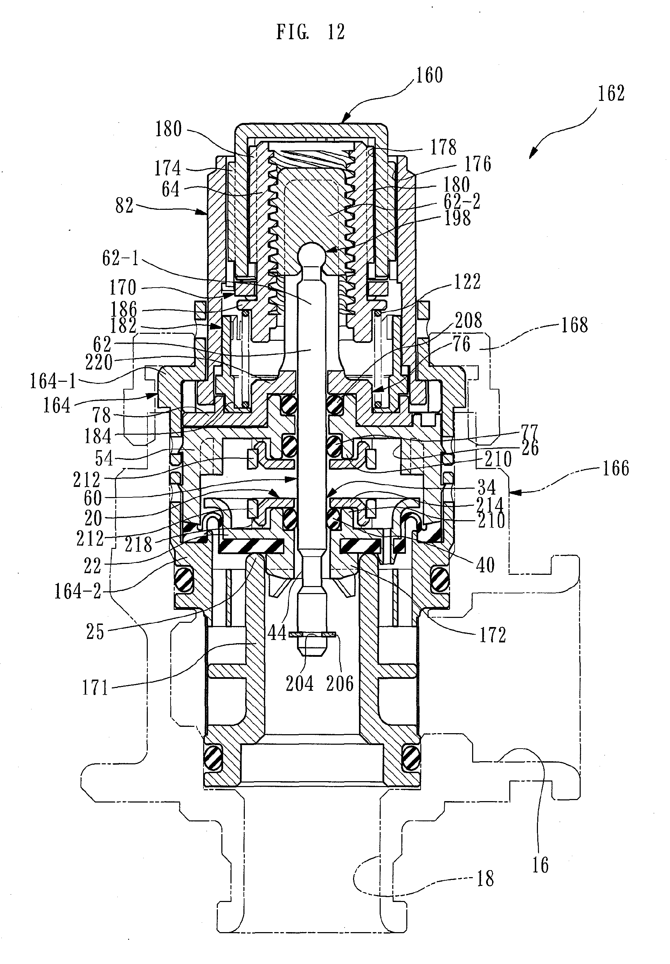

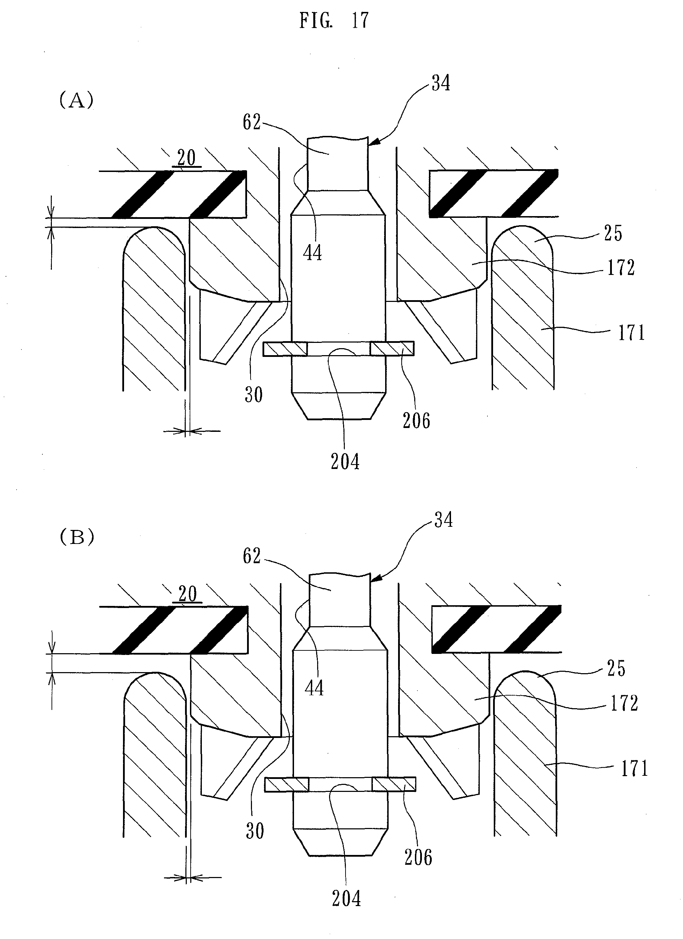

Figs. 12-20 show another embodiment of the present invention.
In Fig. 12, reference sign 160 denotes a drive ring, which has an inverted cup-like shape and is provided by a tubular-shaped member having a bottom wall in the present embodiment.
This drive ring 160 has a function that is basically the same as that of the drive ring 80 of the first embodiment.
That is, each time when the drive ring 160 is pressed downwardly, a ring-like shaped rotor 170 described below is fed in the rotating direction, whereby the pilot valve 34 is moved between the water discharge position and the water stop position in response to the intermittent feed motion of the rotator 170 and is held in one of the positions.

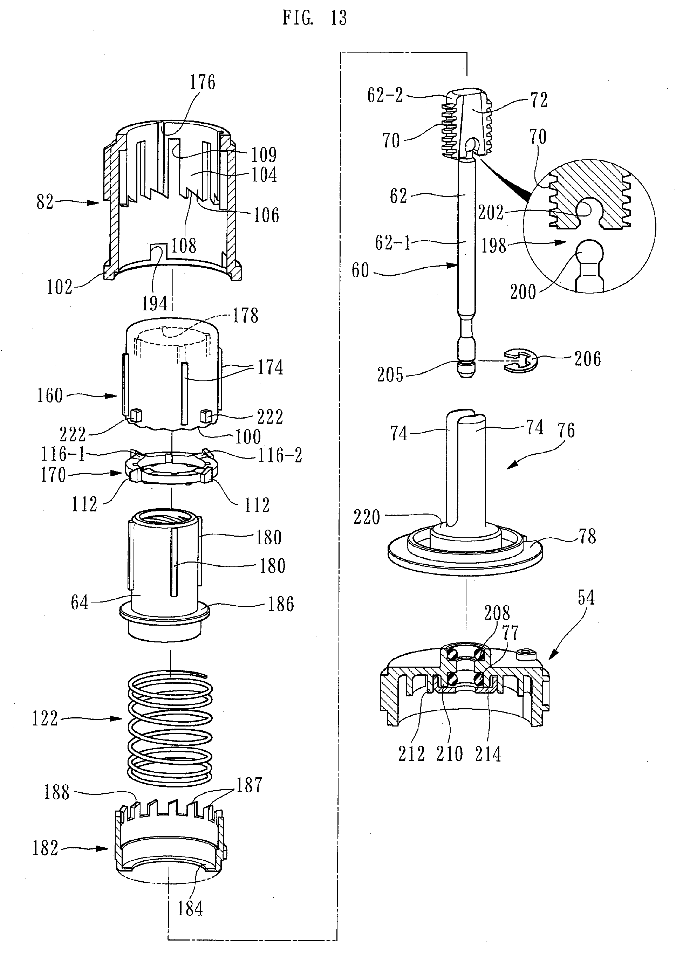

In this embodiment, the drive ring 160 having the inverted cup-like shape is fitted in the sleeve 82, and is movable relative to the sleeve 82 in the axial direction, i.e., in the vertical direction (as seen in the figure).
As shown in Fig. 13, vertically extending protrusions 174 are provided on an outer circumferential surface of the drive ring 160 so as to be located in respective circumferential portions, The protrusions 174 are fitted in respective vertically extending recesses 176 provided in an inner circumferential surface of the sleeve 82, whereby the drive ring 160 is rotated integrally with rotation of the sleeve 82.
That is, the rotary motion of the sleeve 82 is transmitted to the drive ring 160.
The drive ring 160 is further provided with vertically extending recesses 178 that are formed in an inner circumferential surface of the drive ring 160. The recesses 178 receive respective vertically extending protrusions 180 that are provided on an outer circumferential surface of the second axial portion 64 of the drive rod 60. Thus, the protrusions 180 are fitted in the respective recesses 178 whereby the second axial portion 64 as an internally-threaded portion is rotated integrally with the drive ring 160.
That is, with rotation of the sleeve 82, the rotary motion of the sleeve 82 is transmitted to the drive ring 160 and the second axial portion 64 as the internally-threaded portion, so that they are rotated integrally with each other.
It is noted that guide protrusions 222 are provided on an outer circumferential surface of the drive ring 160. The guide protrusions 222 are fitted in the respective fitting grooves 109 of the sleeve 82, so as to guide the drive ring 160 that is slid in the vertical direction.

In the present embodiment, a valve mechanism as a whole including the drive ring 160 and sleeve 82 is provided by a cartridge as a single unit that is detachably attached. In Fig. 12, reference sign 162 denotes the cartridge.
In Fig. 12, reference sing 164 denotes a cartridge casing of the cartridge 162. This cartridge casing 164 is divided into an upper portion 164-1 and a lower portion 164-2 that are elastically connected via the back-pressure chamber defining member 54 that constitutes an intermediate portion of the cartridge.
The cartridge 162 is inserted inside the housing 166 and is unremovably fixed by a fixture nut 168 that is screwed on the housing 166.

In this embodiment, the main valve body 22 of the main valve 20, which is provided by a diaphragm valve, is formed integrally with a main valve guide 172. This main valve guide 172 is fitted inside a tubular portion 171 that has the main valve seat 25 in its upper end portion. The main valve guide 172 serves to guide the movement of the main valve 20.
The main valve guide 172 is disk-like shaped and has a predetermined thickness in the axial direction, i.e., in the vertical direction. A predetermined annular gap is defined between an inner circumferential surface of the tubular portion 171 and an outer circumferential surface of the main valve guide 172 that is fitted in the tubular portion 171.

This main valve guide 172 serve as a restrictor against the water that passes over the main valve seat 25 so as to flow toward a downstream side portion (secondary side portion) of the main channel.
Described in detail, in a state in which the main valve 20 is largely distant from the main valve seat 25 in the upward direction, the flow rate of the water flowing to the outflow channel 18 as the secondary side portion of the main channel from the inflow channel 16 as the primary side portion of the main channel is determined depending on an amount of separation of the main valve 20 from the main valve seat 25. However, when the gap between the main valve guide 172 and the main valve seat 25 is reduced as the main valve 20 is moved in the valve closing direction, the gap between the main valve guide 172 and the main valve seat 25 gradually comes to serve to restrict the water flowing rate. Then, when the main valve 20 is further moved in the valve closing direction, i.e., in the downward direction (as seen in the figure) thereby causing the main valve guide 172 is fitted inside the tubular portion 172 even by a small amount, the opening degree of the main channel is determined depending on a small annular gap between the main valve guide 172 and the tubular portion 171.

This small annular gap is not changed by further movement of the main valve 20 in the valve closing direction, and is held constant until the main valve 20 is seated on the main valve seat 25.
Consequently, the flow rate of the water flowing through the main channel, i.e., from the inflow channel 16 as the primary side portion of the main channel to the outflow channel 18 as the secondary side portion of the main channel is held substantially constant and small.

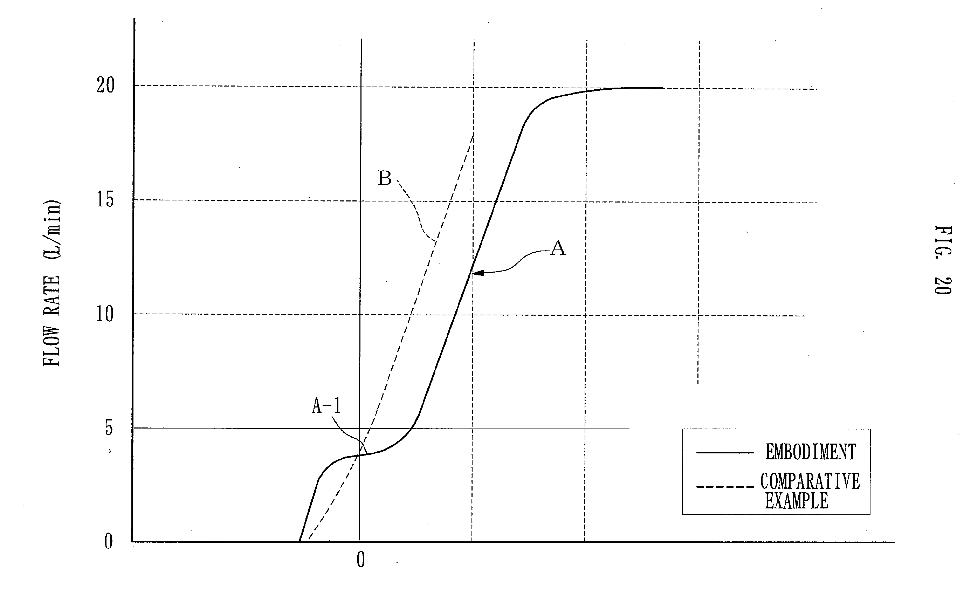

Fig. 20 is a graph showing an effect provided by the main valve guide 172 serving as the restrictor, by a relationship between an amount of movement of the main valve 20, namely, an amount of movement of the first axial portion 62 of the drive rod 60 (i.e., amount of movement of the pilot valve 34) and a rate of the water flow, wherein the movement amount is represented in the abscissa while the flow rate is represented in the ordinate.
In a discharge curve A shown in the figure, there is a portion A-1 that lies horizontally with its inclination being small. The portion A-1 is a portion representing a change of the flow rate upon fitting of the main valve guide 172 into the tubular portion 171. As shown in the figure, the provision of the main valve guide 172 makes it possible to minimize the change of the flow rate immediately before closing of the main valve 20 or at an initial stage of opening of the main valve 20.
Consequently, where a minimum flow-rate position of a flow-rate regulating handle described below is set, even if there is variation in various components located between the flow-rate regulating handle and the pilot valve 34 or a variation in assembly of the components, it is possible to eliminate inconvenience that the flow rate at the initial stage of the valve opening is considerably influenced by the variation.

In Fig. 20, B indicated by broken line represents a discharge characteristic curve in an arrangement in which the main valve guide 172 is not provided. As shown in the figure, in the arrangement without the main valve guide 172, the flow rate is largely changed immediately when the first axial portion 62 is moved from the valve closed state even by a small distance.
It is noted that the main valve guide 172 is provided also in the first embodiment in which the main valve guide 172 is denoted by the same reference sign.

The valve device in this embodiment has a feature that the flow rate is little changed and stabilized when the main valve 20 is close to the valve closing position and also a feature that the flow-rate characteristic is stabilized over a long term with small aged deterioration by a long-term service.

Described specifically, in the valve device shown in Fig. 29 in which the main valve 304 is closed following closing of the pilot valve 314 that is made by pressing the pilot valve 314 against the pilot valve seat 318 of the main valve 304, a portion of the pilot valve 314 brought into contact with the pilot valve seat 318 is gradually fatigued (permanently distorted or permanently deformed) or worn, and a recess is formed in the contact portion of the pilot valve 314, i.e., a lower surface of the pilot valve 314 (as seen in the figure). Further, the recess becomes larger gradually.
Consequently, there is a problem that the regulated flow rate is changed even where the movement of the pilot valve 314 is constant.

On the other hand, in the present embodiment, the drive rod 60, i.e., the first axial portion 62 extends through the main valve 20 the axial direction, so that the pilot valve 34 is moved in the axial direction. In this arrangement, the pilot valve 34 is held in elastic contact with the pilot valve seat 38 of the main valve 20, i.e., the O ring 40 held in the pilot valve seat 38, in the radial direction. This arrangement provides a flow-rate regulating characteristic stabilized for a long term without suffering the above-described drawback.

In addition, in the valve device in which the pilot valve 314 is pressed against the pilot valve seat 318, i.e., against the main valve 304, there is a possibility that occurrence of so-called chatter vibration upon closing of the pilot valve 314, when the pilot valve 314 is not gently seated onto the pilot valve seat 318 of the main valve 304, namely, when the pilot valve 314 is seated onto the pilot valve seat 318 with irregular and complicated motion of the pilot valve 314 that is caused by abrupt change of the water flow within the pilot channel 312. This tendency is prominent, particularly, in an arrangement in which the pilot valve 314 is pressed against the pilot valve seat 318 of the main valve 304 by using an elastic force of a spring.
In the present embodiment having a different pilot mechanism constituted by the pilot valve 34 and the pilot valve seat 36, such an inconvenience is not caused.
The above-described first embodiment is the same with respect to this point.

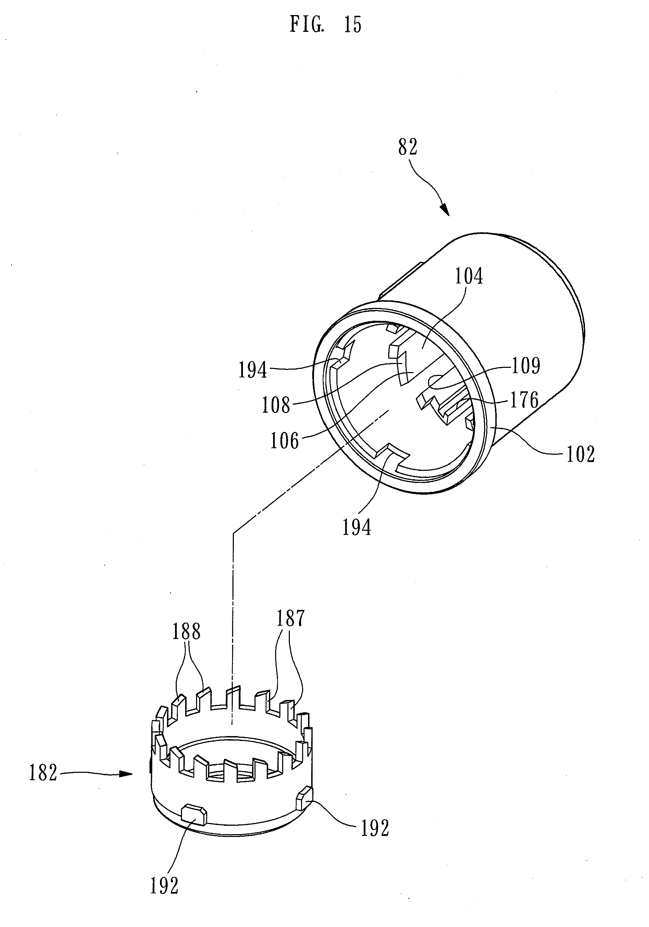

In this embodiment, a forced rotation ring 182 is provided on a lower side of the second axial portion 64, so as to have a function of forcedly rotate the rotor 170 upon pressing of the drive ring 160.
This forced rotation ring 182 is set on the base portion 78 of the rotation preventing member 76, as shown in Fig. 12.
As shown in Figs. 13 and 15, the forced rotation ring 182 has a tubular shape as a whole, with an inwardly extending flange portion 184 provided in a lower end of the forced rotation ring 182. The spring 122 is interposed between the inwardly extending flange portion 184 and an outwardly extending flange portion 186 of the second axial portion 64.

The flange portion 184 of the force rotary ring 182 serves also as a slip washer, so that the forced rotation ring 182 is slippingly rotated on the base portion 78 of the rotation preventing member 76 upon rotation of the sleeve 82, i.e., upon rotation of the second axial portion 64 that is caused integrally with the rotation of the sleeve 82, for thereby preventing the spring 122 from being twisted or deformed by the rotation of the second axial portion 64.
Consequently, it is possible to cause the upward elastic force of the spring 122 to act as a predetermined appropriate elastic force.

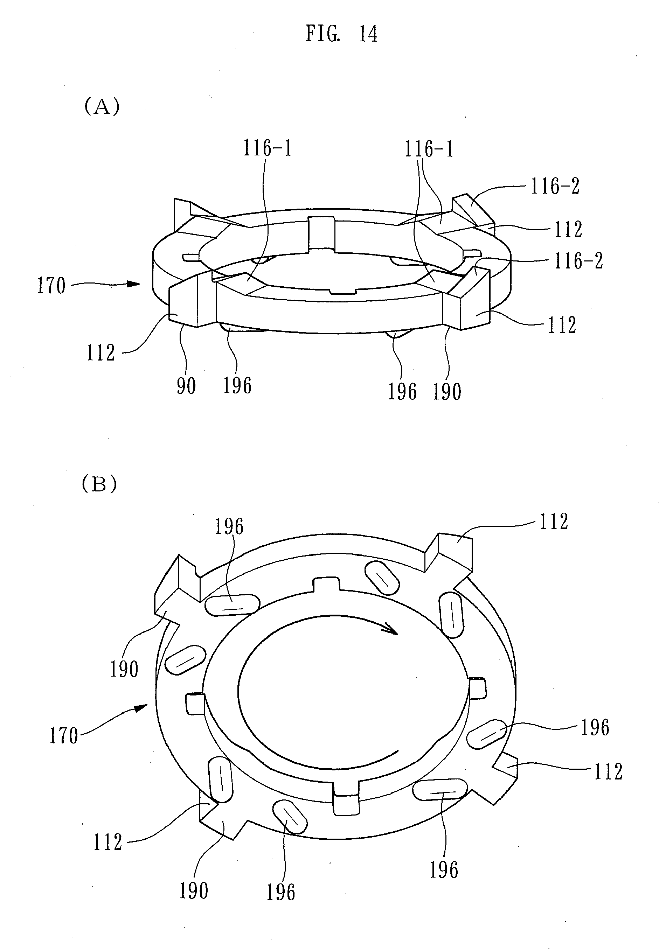

The forced rotation ring 182 is integrally provided with a plurality of claws 187 that are arranged at a predetermined spacing interval in the circumferential direction. The claws 187 protrude upwardly from an upper end of the ring 182, and have inclined upper surfaces providing cam surfaces 188.
When a downward force is applied from the drive ring 160 to the rotor 170, the cam surfaces 188 are brought into contact with corner portions 190 of lower surfaces of the respective protruding portions 112, as shown in Fig. 14 in detail, whereby the rotor 170 is forcedly rotated owing to the cam effect, in counterclockwise direction as seen in Fig. 14.

Where a resistance against rotation of the rotor 170 (i.e., a sum of a resistance against sliding of the rotor 170 on an upper surface of the flange portion 186 of the second axial portion 64 and a resistance against sliding of the rotor 170 on the cam surfaces 100 of the drive ring 160) is small, the rotor 170 is rotated by the cam effect provided by the cam surfaces 100 of the drive ring 160 and cam surfaces 116-1 (see Fig. 14) of the rotor 170 owing to the biasing force of the spring 122, even before contact of the rotor 170 with the cam surfaces 188 of the forced rotation ring 182.

The resistance against the rotation of the rotor 170 is gradually increased by abrasion powders produced on the sliding surfaces as a result of long-term use.
Therefore, there is a risk that the rotor 170 is not lightly and smoothly rotated even if the drive ring 160 is pressed downwardly.
However, even if the rotor 170 is not smoothly rotated, the rotor 170 is forcedly rotated by the cam surfaces 188 of the forced rotation ring 180, as a result of contact of the corner portions 190 of the protruding portions 112 of the rotor 170 with the cam surfaces 188 of the forced rotation ring 182, which is made by strongly pressing the drive ring 160 in the downward direction.

In this embodiment, as is clearly shown in Fig. 14, the cam surfaces 116-1 of the rotor 170 brought into contact with the cam surfaces 100 of the drive ring 160 are different from the cam surfaces 116-2 provided by upper surfaces of the protruding portions 112, with respect to inclination. Described in detail, the cam surfaces 116-2 of the protruding portions 112 have a larger inclination than that of the cam surfaces 116-1.
The cam surfaces 116-2 of the protruding portions 112 are to be brought into contact with the cam surfaces 108 of the guide portion 104 of the sleeve 82, for thereby rotating the rotor 170 owing to the cam effect.

As shown in Fig. 15, fitting protrusions 192 are provided on an outer circumferential surface of the forced rotation ring 182. The fitting protrusions 192 are fitted in fitting portions 194 of the sleeve 82 whereby the forced rotation ring 182 is rotated integrally with rotation of the sleeve 82.

As shown in Fig. 14, ribs 196 are provided on a lower surface of the rotor 170 so as to arranged at a predetermined spacing interval in the circumferential direction, so that the rotor 170 is held in contact at the ribs 196 with an upper surface of the flange portion 186.
Each of the ribs 196 is elongated, and has a cross sectional shape that is downwardly convex and curved, so that each rib 196 is in contact at a distal end of the downwardly convex and curved surface with the upper surface of the flange portion 186.
That is, the contact of the rotor 170 with the flange portion 186 is made through a line contact rather than a surface contact.
Consequently, the rotor 170 can be smoothly rotated on the flange portion 187 with a small sliding resistance.

Each rib 196 may be formed to have an arcuate shape extending in a direction of circumference or rotation of the rotor 170 or have a straight linear shape extending in a direction of line tangent to the circumference of the rotor 170. However, in this embodiment, each rib 196 is formed to be inclined to extend away from an inner peripheral end toward an outer peripheral end.
Described in detail, each rib 196 is inclined in such a direction that causes abrasion powders (produced on the sliding surfaces) to be displaced by each rib 196, away from the inner peripheral end toward the outer peripheral end when the rotor 170 is rotated in a direction indicated by arrow in Fig. 14.
Thus, each rib 196 serves to assure smooth rotation of the rotor 170 owing to the line contact and also to prevent increase of the sliding resistance that could be caused by the abrasion powders (produced on the sliding surfaces).

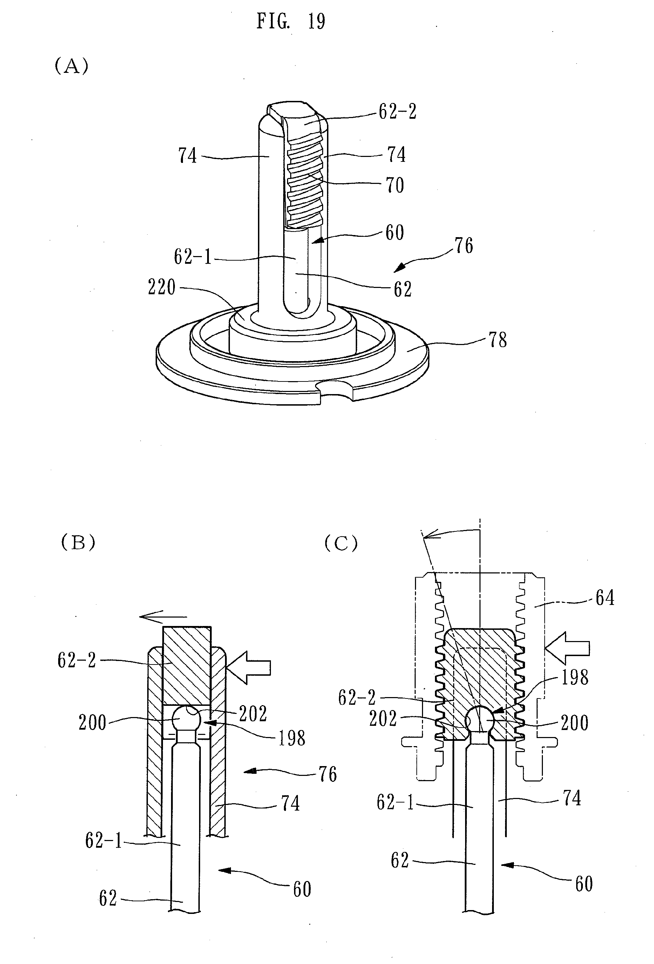

Further, in this embodiment, an upper protruding portion 62-2 and a lower axial portion 62-1 of the first axial portion 62 are constituted independently of each other, and are connected via a ball joint 198, as shown in Figs. 13 and 19 (C), such that the two portions 62-1, 62-2 are rotatable relative to each other in three dimensional directions.
Described in detail, a ball portion 200 is formed integrally in an upper end portion of the lower axial portion 62-1, and the ball portion 200 is fitted in a spherical recessed surface 202 of the upper protruding portion 62-2 such that the ball portion 200 is rotatable in the three dimensional directions.

Consequently, even if an external force is applied to the first axial portion 62 as shown in Fig. 19 (C), only the upper protruding portion 62-2 that is constituted independently of the lower axial portion 62-1 is tilted, while the lower axial portion 62-1 is held in perpendicular posture without the lower axial portion 62-1 being influenced by the external force.
It is therefore possible to effectively prevent tilting of the lower axial portion 62-1 that could affect sealing arrangement provided by the O rings 40, 77.

In this embodiment, as shown in Figs. 12, 13, 17 and 18, an annular groove 204 is formed in a lower end portion of the first axial portion 62 that is located on a lower side of the above-described recessed portion 44, so as to receive therein an elastic retainer ring 206 (E ring in this embodiment) having a diameter larger than the first axial portion 62. This elastic retainer ring 206 has a function as described below.

In the valve device of the present embodiment, as described above, the pilot valve 34 is moved in the vertical direction (as seen in the figure) so as to control the pressure in the back pressure chamber 26, for thereby causing the main valve 20 to be moved (displaced) in the vertical direction (as seen in the figure) following the pilot valve 34.
In this valve device, as long as a pressure of supplied water is within a normal range, it is possible to cause the main valve 20 to follow the movement of the pilot valve 34 and accordingly to be satisfactorily moved in its opening/closing direction.
However, in a low pressure stage in which the supplied water pressure is lower than a predetermined value, it is not necessarily possible to assure movement of the main valve 20 in the opening/closing direction following the movement of the pilot valve 34.
That is, when the main valve 20 is placed in the closed state or slightly open state, there could be a case in which the main valve 20 is not moved in the upward direction (as seen in the figure) following the movement of the pilot valve 34.

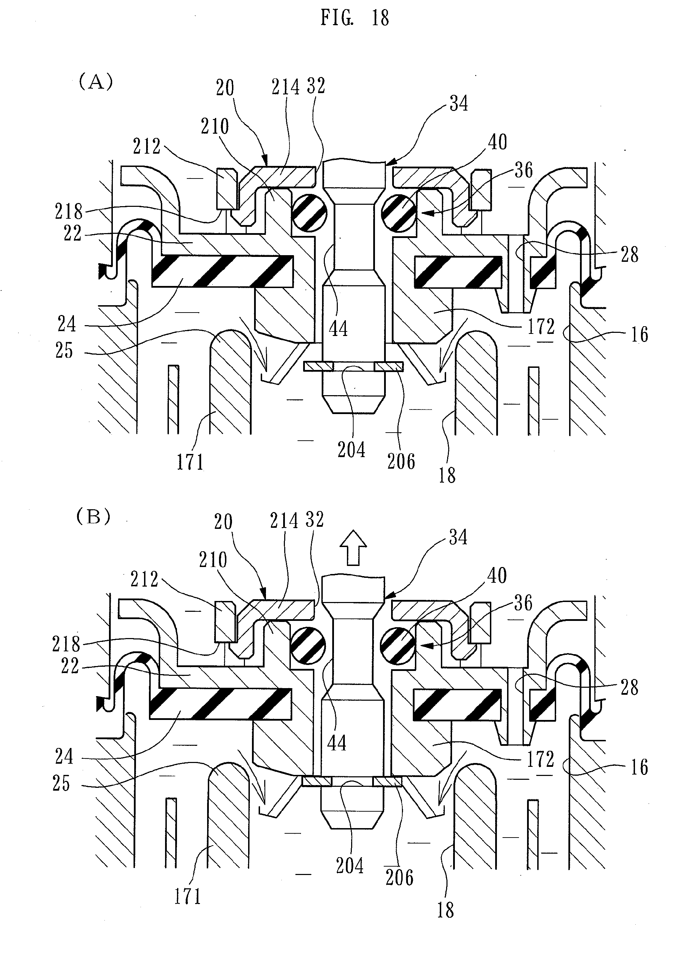

In such a case, according to the present embodiment, when the pilot valve 34, i.e., the first axial portion 62 is moved upwardly (as seen in the figure) by a certain distance, the elastic retainer ring 206 provided in the lower end portion of the first axial portion 62 is brought into contact with the lower surface of the main valve 20, as shown in Fig. 18 (B). Thus, even if the main valve 20 is not lifted following the upward movement of the pilot valve 34 owing to pressure balance, the main valve 20 is forcedly lifted by further upward movement of the pilot valve 34.
Therefore, in this embodiment, even where the main valve 20 is not smoothly moved by control of the pressure in the back pressure chamber 26 performed by the pilot valve 34, the main valve 20 can be physically or mechanically lifted by the first axial portion 62, by continuously moving the first axial portion 62 in the upward direction (as seen in the figure), thereby making it possible to reliably open the main valve 20 so as to perform the water discharge, or making it possible to increase the opening degree of the main channel so as to increase the water discharge rate.

As described above, the elastic retainer ring 206 serves as a contact member, which is brought into contact with the lower surface of the main valve 20 upon the upward movement of the pilot valve 34, i.e., first axial portion 62 by a certain distance, so as to cause the main valve 20 to be forcedly open. The contact member may be provided by any one of various kinds of members other than the elastic retainer ring 206, or may be otherwise constructed to be provided in the lower end portion of the first axial portion 62.

In this embodiment, as shown in Fig. 12, there is provided, in addition to the O ring 77 arranged to seal between the back pressure chamber 26 and the first axial portion 62, another O ring (annular elastic seal member) 208 which is disposed in a position right above the O ring 77 and which is held in elastic contact with an outer circumferential surface of the first axial portion 62.
This O ring 208 has function as described below.
That is, the O ring 208 serves to cooperate with the O ring 77 (disposed right below the O ring 208) to define a grease retainer for retain therein grease as lubricant for assuring smooth sliding movement of the first axial portion 62.

Owing to the effect provided by formation of the grease retainer by the O ring 208, it is possible to effectively prevent leakage of the grease outwardly, specifically described, prevent leakage of the grease in the upward direction (as seen in the figure).
In addition, the O ring 208 serves as a dust seal for preventing external dust or the like from entering the grease retainer and adhering onto the sliding surface of the first axial portion 62.

In the present embodiment, each of the O rings 40, 77, 208 is provided by an O ring made of a mixture including, as a filler, white carbon in place of carbon black.
Specifically, the O ring providing each of the O rings 40, 77, 208 is provided by E575 (product code) made of EPDM and available from NOK CORPORATION.

Further, in the present embodiment, as constructions for attaching the O rings 40, 77, 208, there are employed constructions as follows:
The main valve body 22 of the main valve 20 has an inner annular portion 210 and an outer annular portion 212 that protrude from its plate surface. The O ring 40 is fitted in a recess inside the inner annular portion 210 and is held in elastic contact with the outer circumferential surface of the first axial portion 62.
The O ring 40 received in the recess defined by the inner annular portion 210 is prevented by a cap 214, from being removed from the recess.

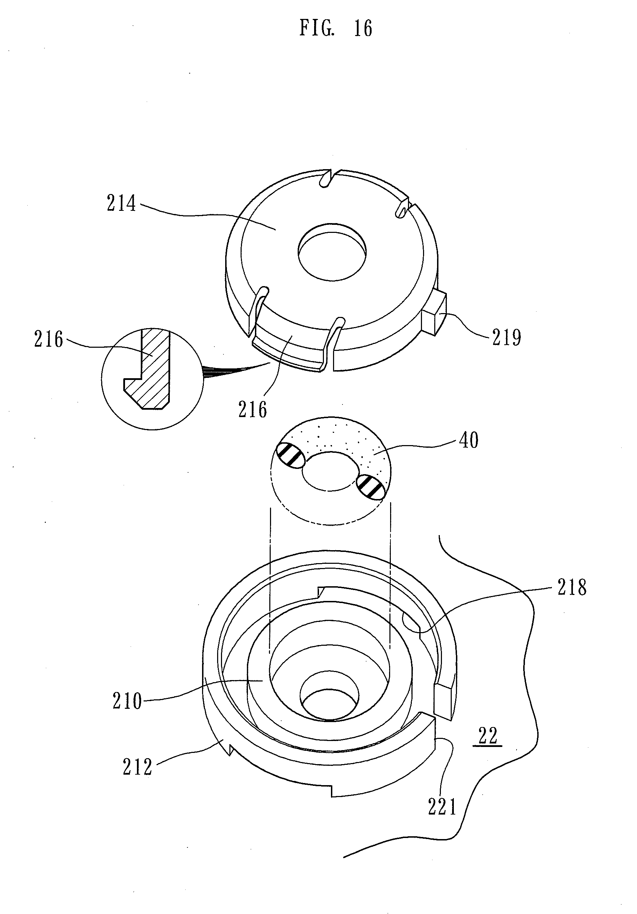

As shown in Fig. 16, the cap 214 has a shallow inverted-plate like shape, and is attached to the main valve body 22 such that elastic claws 216 formed in the cap 214 cove the inner annular portion 210 and the O ring 40 (that is accommodated inside the inner annular portion 210). The elastic claws 216 are elastically engaged to respective cutout portion 218 that are provided at root of the outer annular portion 212, so that the cap 214 is prevented from being removed from the main valve body 22.
In Fig. 16, reference signs 219, 221 denote a protrusion and a cutout, respectively, which are provided for positioning the cap 214 and the outer annular portion 212 relative to each other in the rotating direction.

The construction for attaching the O ring 77 is basically the same as that for attaching the O ring 40 except for that the O ring 77 is attached in a direction vertically inverse to a direction of the attachment of the O ring 40 and that the inner annular portion 210 and the outer annular portion 212 are provided on a lower surface of the above-described back-pressure chamber defining member 54.

The construction for attaching the O ring 208 is basically the same as those for attaching the O rings 40, 77. However, in the construction for attaching the O ring 208, there is provided a closure portion 220 in place of the cap 214, such that the closure portion 220 is formed integrally in the base portion 78 of the rotating preventing member 76.
According to this construction, the O rings 40, 77, 208 can be easily attached in respective states in which they are fitted on the first axial portion 62.
Further, each of the O rings 40, 77, 208 can be easily replaced with a new one when it is damaged or worn requiring the replacement.

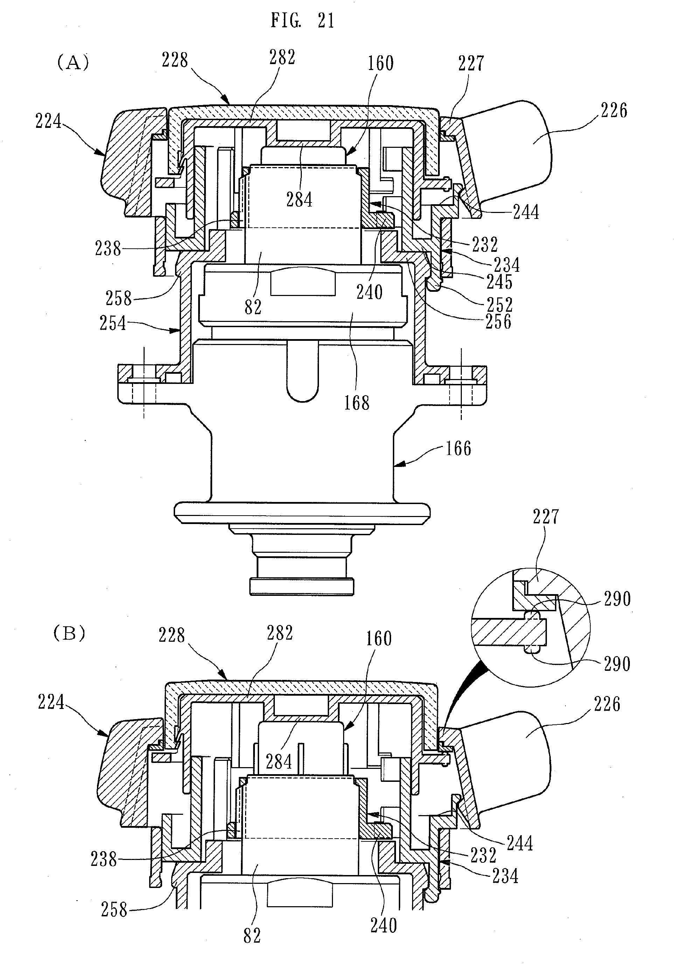

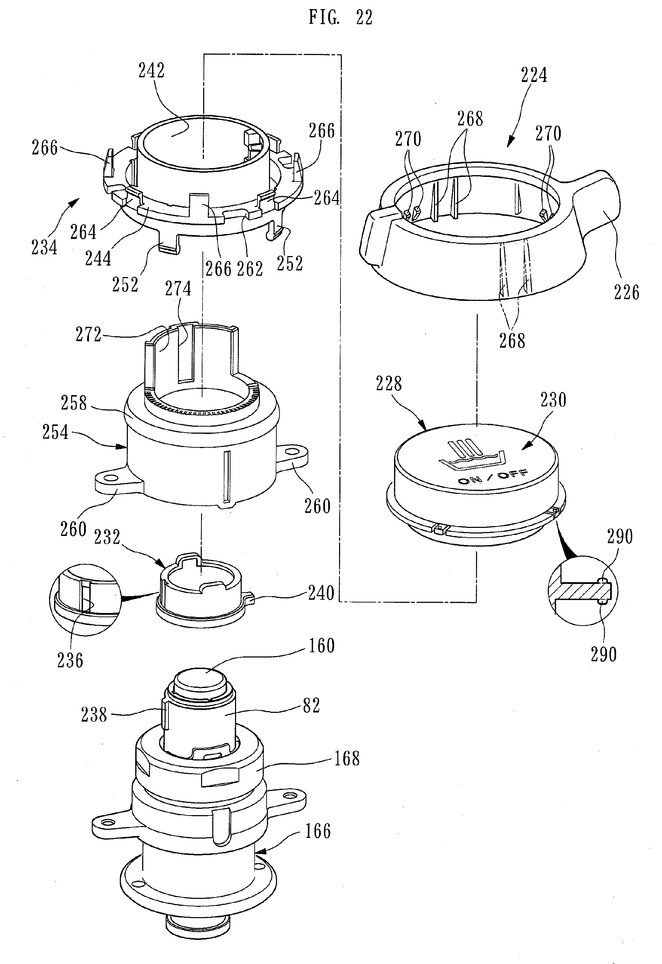

Figs. 21-26 show an operating device in the present embodiment.
This operating device has a rotary-type flow-rate regulating handle 224 and a pushbutton-type water discharge/stop operating portion 228, as shown in Fig. 21.
An indication 230 is provided on an upper surface of the water discharge/stop operating portion 228, as shown in Fig. 22.
The water discharge/stop operating portion 228 is fixed in the rotating direction and is movable only in the vertical direction (as seen in the figure).
As shown in Fig. 21, the rotary-type flow-rate regulating handle 224 has a circular ring-like shape as a whole, and is provided with a lever 226 that is located in a predetermined circumferential portion and outwardly protrudes.
It is noted that the flow-rate regulating handle 224 is slightly tapered as a whole.
Between the above-described sleeve 82 and the ring-shaped flow-rate regulating handle 224, there are interposed an inner ring member 232 as an intermediate ring for transmitting the operational force, and an outer ring member 234.

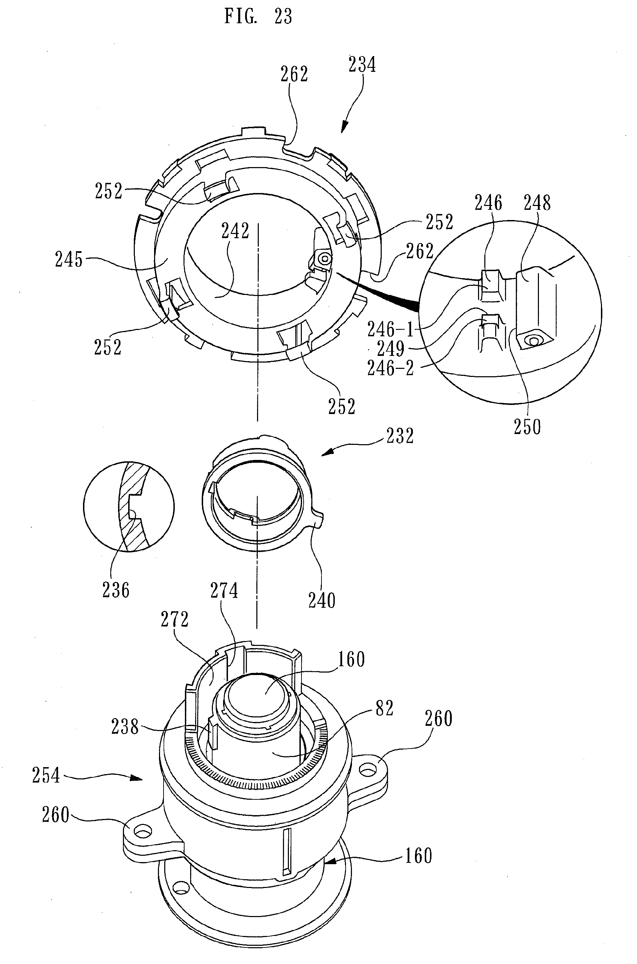

As shown in Figs. 22 and 23, the inner ring member 232 has a tubular shape, and is mounted on the sleeve 82 from top to down, such that the inner ring member 232 is supported from downside by the sleeve 82.
The inner ring member 232 has a positioning through-hole 236 that is provided in a predetermined circumferential portion of the inner ring member 232, such that a positioning protrusion 238 provided on an outer circumferential surface of the sleeve 82 is fitted in the positioning through-hole 236. Owing to the effect of engagement of the positioning through-hole 236 and the positioning protrusion 238, the inner ring member 232 is rotated integrally with the sleeve 82.
The inner ring member 232 further had an outwardly protruding, positioning protrusion 240 that is provided in a predetermined circumferential portion of an outer circumferential surface of the inner ring member 232.

Meanwhile, the outer ring member 234 has a tubular portion 242, a flange portion 244 and downwardly-protruding elastic claws 252, as shown in Fig. 22.
The outer ring member 234 is attached to a tubular member 254 serving as a support member for supporting the outer ring member 234, as shown in Fig. 21.
Described in detail, the elastic claws 252 are elastically engaged to an annular-shaped stepped portion 258 that is provided by an upper end portion of outer periphery of the tubular member 254, such that a bottom portion 245 (see Fig. 23) of the outer ring member 234 is seated on the flange portion 256 of the tubular member 254. Thus, the outer ring member 234 is supported by the tubular member 254 and rotatably attached to the tubular member 254.
It is noted that the tubular member 254 has tongue-like fixed portions 260 in its lower end portions and is fixedly attached to the housing 166 such that the fixture nut 168 and an upper portion of the housing 166 are covered by the tubular member 254, as shown in Fig. 21.

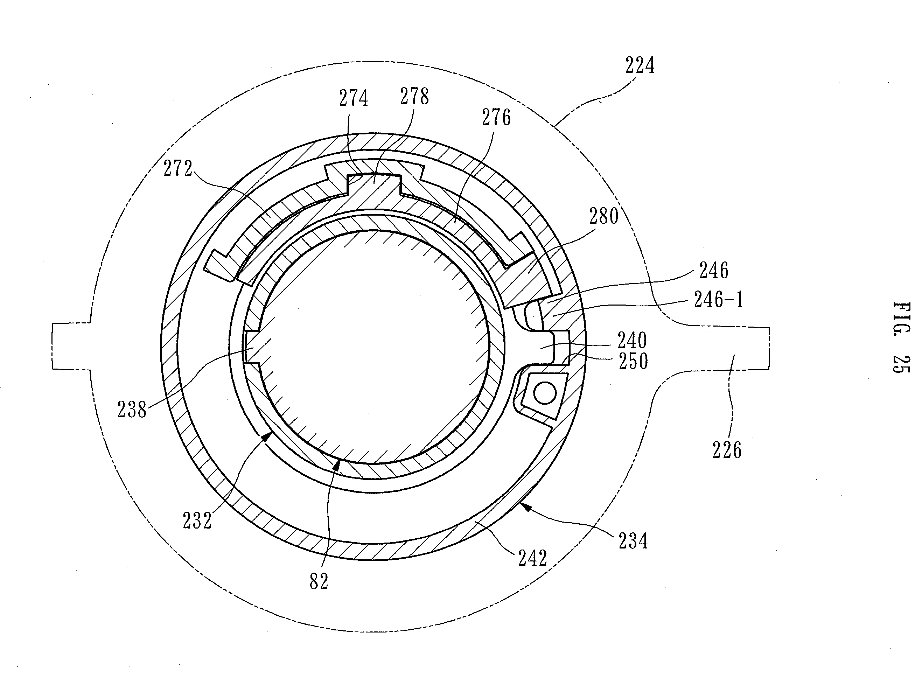

The outer ring member 234 has a pair of protrusions 246, 248 that are provided in a predetermined circumferential portion of an inner circumferential surface of the outer ring member 234. The protrusions 246, 248 are spaced apart from each other by a small distance and protrude inwardly, as shown in a partially enlarged view of Fig. 23.
Between the protrusions 246, 248, there is formed a positioning groove 250 in which the outwardly protruding, positioning protrusion 240 of the inner ring member 232 is fitted as shown also in Fig. 25, whereby the inner ring member 232 and the outer ring member 234 are rotatable integrally with each other.
A protrusion 246 as one of the pair of protrusions 246, 248 is cut at its vertically intermediate portion that provides a cutout portion 249 by which the protrusion 246 is divided into an upper protrusion 246-1 and a lower protrusion 246-2.

As shown in Fig. 22, the outer ring member 234 further has positioning cutouts 262 and upwardly-extending elastic claws 264 that are provided in the flange portion 244. A plurality of pairs of the cutouts 262 and claws 264 are provided in respective circumferential portions of the flange portion 244, such that the cutout 262 and claw 264 of each of the pairs are positioned in respective different positions.
Further, in the flange portion 244, upwardly-extending fitting guides 266 are provided for the flow-rate regulating handle 224 that is slightly tapered.

Meanwhile, as shown in Fig. 22, the flow-rate regulating handle 224 has ribs 268 and engaging protrusions 270 that are provided in respective circumferential portions of an inner circumferential surface of the handle 224. The ribs 268 serve as positioning protrusions to be fitted in the positioning cutouts 262 of the outer ring member 234, while the engaging protrusions 270 are provided to be elastically engaged to the upwardly-extending elastic claws 264.
The flow-rate regulating handle 224 and the outer ring member 234 are rotatable integrally with each other owing to the fitting of the cutouts 262 of the outer ring member 234 and the ribs 268 of the flow-rate regulating handle 224. Further, the flow-rate regulating handle 224 and the outer ring member 234 are fixed to each other in the vertical direction owing to the effect of the engagement of the upwardly-extending elastic claws 264 of the outer ring member 234 and the engaging protrusions 270 of the flow-rate regulating handle 224.
That is, the flow-rate regulating handle 224 is prevented by the effect of the engagement of the elastic claws 264 and the engaging protrusions 270, from being removed from the outer ring member 234 in the upward direction (as seen in the figure).

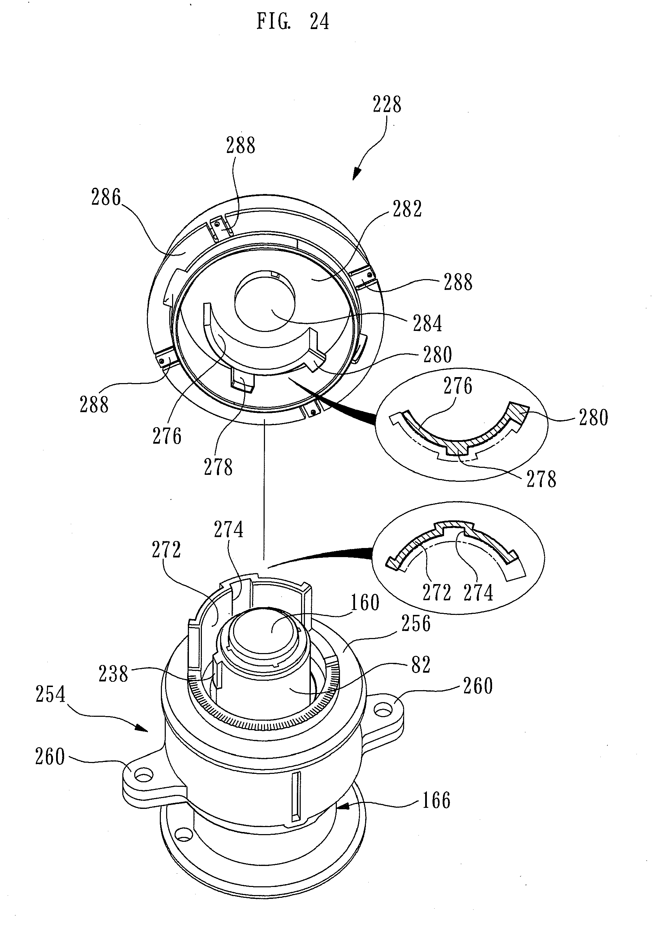

As shown in Fig. 24, the tubular member 254 as the support member has an accurate-shaped, upwardly-extending portion 272 extending upwardly from an upper surface of the inwardly-extending flange portion 256. The upwardly-extending portion 272 has a vertically-extending, positioning recess 274 that is provided in a circumferentially intermediate portion of an inner circumferential surface of the upwardly-extending portion 272.

Meanwhile, the water discharge/stop operating portion 228 has a downwardly-extending portion 276 extending downwardly from an upper wall 282 of the water discharge/stop operating portion 228.
This downwardly-extending portion 276 has a rotating-direction positioning protrusion 278 which is provided in its circumferentially intermediate portion and extends downwardly.
As shown in Fig. 25, the water discharge/stop operating portion 228 is attached to the tubular member 254 with the downwardly-extending portion 276 being held in fitting engagement with the upwardly-extending portion 272. The water discharge/stop operating portion 228 is positioned relative to the tubular member 254 owing to the positioning protrusion 278 being fitted in the positioning recess 274. That is, the water discharge/stop operating portion 228 is fixed relative to the tubular member 254 in the rotating direction, owing to the positioning effect.

The water discharge/stop operating portion 228 further has a radially-outwardly-extending stopper protrusion 280 in a circumferential end of the accurate-shaped downwardly-extending portion 276.
This stopper protrusion 280 is provided to define an end position upon operative rotation of the flow-rate regulating handle 224 in a low flow-rate direction.
Described in detail, the rotation of the flow-rate regulating handle 224 is limited upon contact of the stopper protrusion 280 with the above-described protrusion 246 (i.e., upper protrusion 246-1, described more in detail) of the outer ring member 234.
This stopper protrusion 280 serves also as a lock protrusion for locking the water discharge/stop operating portion 228 in the water stopping state.

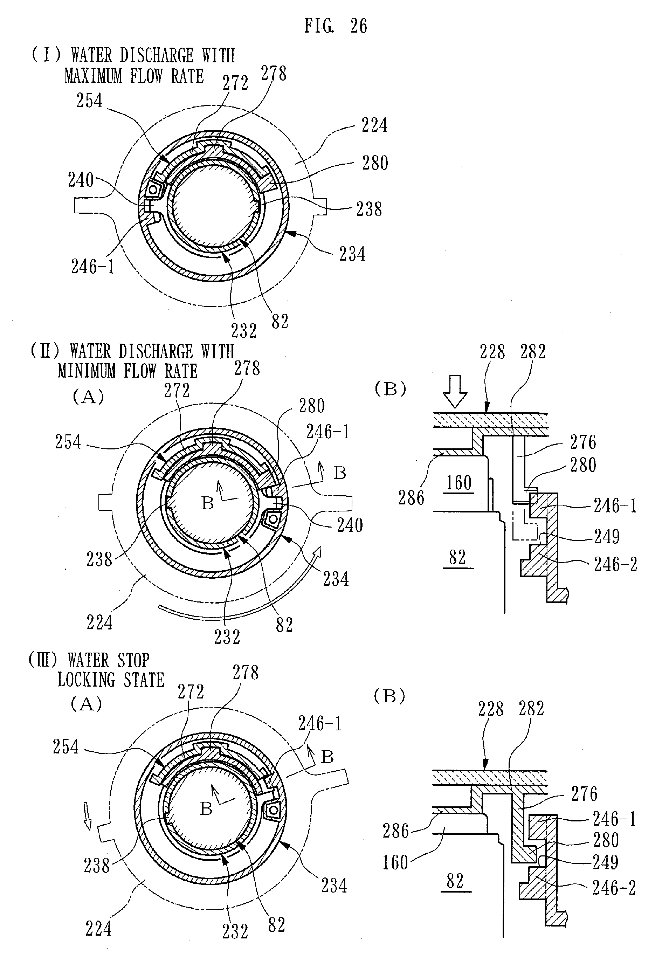

As described above, the flow-rate regulating handle 224 is positioned in the minimum flow-rate position by contact of the upper protrusion 246-1 of the outer ring member 234 with the stopper protrusion 280 of the water discharge/stop operating portion 228. Fig. 25 and Fig. 26 (II) show this state.
In this state, as shown in Fig. 26 (III), when the water discharge/stop operating portion 228 is pressed downwardly, the pushbutton-type water discharge/stop operating portion 228 is held in a pressed-down position by the above-described thrust lock mechanism.
In this instance, the stopper protrusion 280 is also positioned in a position which is lower than a position shown in Fig. 26 (II), described in detail, which has the same height as the cutout 249 between the upper protrusion 246-1 and lower protrusion 246-2 as shown in Fig. 26 (III) (see Fig. 26 (III) (B)).

In this state, the flow-rate regulating handle 224, i.e., outer ring member 234 becomes rotatable further in the counterclockwise direction.
Then, with rotation of the flow-rate regulating handle 224 in the counterclockwise direction by a small angle, the stopper protrusion 290 is received into the cutout 249 between the upper protrusion 246-1 and the lower protrusion 246-2, as shown in Fig. 26 (III).
In this state, even if an ON (opening) operation is applied to the water discharge/stop operating portion 228, the water discharge/stop operating portion 228 is inhibited by the contact of the stopper protrusion 280 with the upper protrusion 246-2, from being upwardly moved. Thus, the water discharge/stop operating portion 228 is held in the pressed-down position, i.e., the water stop position.
It is noted that the flow-rate regulating handle 224 is inhibited from being further rotated, by contact of the protrusion 246 with a circumferential end of the arcuate-shaped, upwardly-extending portion 272, as shown in Fig. 26 (III).

As shown in Fig. 24, the water discharge/stop operating portion 228 further has a circular-shaped presser portion 284 provided on a lower surface of the upper wall 282 and extending downwardly.
With a downward force being applied to the water discharge/stop operating portion 228, the drive ring 160 is pressed downwardly by the presser portion 284 whereby the pilot valve 34 integrally provided in the first axial portion 62 is moved in the downward direction.
The downwardly pressed water discharge/stop operating portion 228 is held by the above-described thrust lock mechanism, in the pressed-down position, i.e., a lowered position.

The water discharge/stop operating portion 228 further has an outwardly-extending flange portion 286, which is provided with elastic pieces 288 that are located in respective circumferential portions (four portions in this embodiment) of the flange portion 286. Each of the elastic pieces 288 has a pair of protrusions 290 provided in its distal end portion, such that one and the other of the protrusions 290 extend upwardly and downwardly, as shown in Fig. 21 (B).
Each of the protrusions 290 has an outer surface provided by a curved surface.
The flange portion 286, elastic pieces 288 and protrusions 290 (provided in the distal end portions of the elastic pieces 288) function as follows:

When the water discharge/stop operating portion 228 is pressed downwardly in Fig. 21, the flange portion 286 is brought into contact with the flange portion 244 of the outer ring member 234, so as to define a lowered end.
In this instance, the downwardly extending protrusion provided in the distal end portion of each of the elastic pieces 288 is first brought into contact with the flange portion 244 so that each elastic piece 288 is elastically deformed. The elastic deformation of each elastic piece 288 alleviates impact of the flange portion 286 of the water discharge/stop operating portion 228 against the flange portion 244 of the outer ring member 234. Thus, the impact is damped. Owing to this arrangement, it is possible to effectively reduce noise generated when the water discharge/stop operating portion 228 is pressed downwardly.

On the other hand, when the water discharge/stop operating portion 228 is elevated by applying a pressing force to the water discharge/stop operating portion 228, the flange portion 286 of the water discharge/stop operating portion 228 is brought into contact with an inwardly-extending flange portion 227 of the flow-rate regulating handle 224, so as to define an elevated end.
In this instance, too, the upwardly extending protrusion provided in each of the elastic pieces 288 of the water discharge/stop operating portion 228 is first brought into contact with the flange portion 244 of the flow-rate regulating handle 224 so that each elastic piece 288 is elastically deformed. The elastic deformation of each elastic piece 288 alleviates impact of the flange portion 286 of the water discharge/stop operating portion 228 against the flange portion 227 of the flow-rate regulating handle 224, for thereby reducing noise generated upon the impact.

There will be described operation of the above-described operating device as a whole.
Fig. 26 (I) shows a state in which the flow-rate regulating handle 224 has been rotated to a maximum flow-rate position. In this state, the water is caused to flow through the main channel by a maximum flow rate, with the water discharge/stop operating portion 228 being in an opening operation.
When the flow-rate regulating handle 224 is rotated from this state in counterclockwise direction (as seen in the figure), the protrusion 246 (i.e., upper protrusion 246-1, described in detail) of the outer ring member 234 that is rotated integrally with the flow-rate regulating handle 224 is brought into contact with the stopper protrusion 280 of the water discharge/stop operating portion 228 in a minimum flow-rate position as shown in Fig. 26 (II), whereby further rotation of the flow-rate regulating handle 224 is once inhibited.
In this state, when the water discharge/stop operating portion 228 is pressed to be held in the pressed position, the flow-rate regulating handle 224 becomes allowed to be further rotated by a small amount.
Then, when the flow-rate regulating handle 224 is further rotated in the counterclockwise direction by the small amount, the protrusion 246 of the outer ring member 234 is brought into contact with the circumferential end of the upwardly-extending portion 272 of the tubular member 254, whereby further rotation of the flow-rate regulating handle 224 becomes inhibited.

In this state, the stopper protrusion 280 of the water discharge/stop operating portion 228, which is held in the pressed position, enters the cutout 249 defined between the upper protrusion 246-1 and the lower protrusion 246-2, whereby vertical movement of the water discharge/stop operating portion 228 becomes inhibited.
That is, the water discharge/stop operating portion 228 is thus placed in a locked state. Therefore, in this state, even if the pressing force is applied to the water discharge/stop operating portion 228, the water discharge/stop operating portion 228 is not moved upwardly, so that the water discharge based on elevation of the water discharge/stop operating portion 228 is not carried out.

In the operating device of this embodiment, while being placed in the pressed position during the water stopping state, the water discharge/stop operating portion 228 does not substantially protrude upwardly from the ring-like shaped flow-rate regulating handle 224, so that it is possible to prevent occurrence of inconvenience such as non-intentional water discharge that could be caused by non-intentional operation of the water discharge/stop operating portion 228 due to application of an external force thereto during the water stopping state.
That is, the water discharge/stop operating portion 228 is surrounded from its outside by the ring-like shaped flow-rate regulating handle 224 serving as a guard ring, thereby making it possible to effectively prevent non-intentional and erroneous operation applied to the water discharge/stop operating portion 228.

Further, the operating device of this embodiment has a feature that a desired flow rate can be pre-set by a rotational operation applied to the flow-rate regulating handle 224 even during the water stopping state. That is, when the water discharge/stop operating portion 228 is operated to carry out the water discharging operation, the water can be discharged by the desired flow rate from initiation of the water discharging operation, by pre-setting the flow rate through the flow-rate regulating handle 224 during the water stopping state.
Further, in this embodiment, since the water discharge/stop operating portion 228 and the flow-rate regulating handle 224 are disposed independently of each other and are actuated independently of each other, it is possible to obtain an advantage that the water discharge/stop operating portion 228 can be locked in the water stopping state, by utilizing the difference therebetween with respect to actuation.

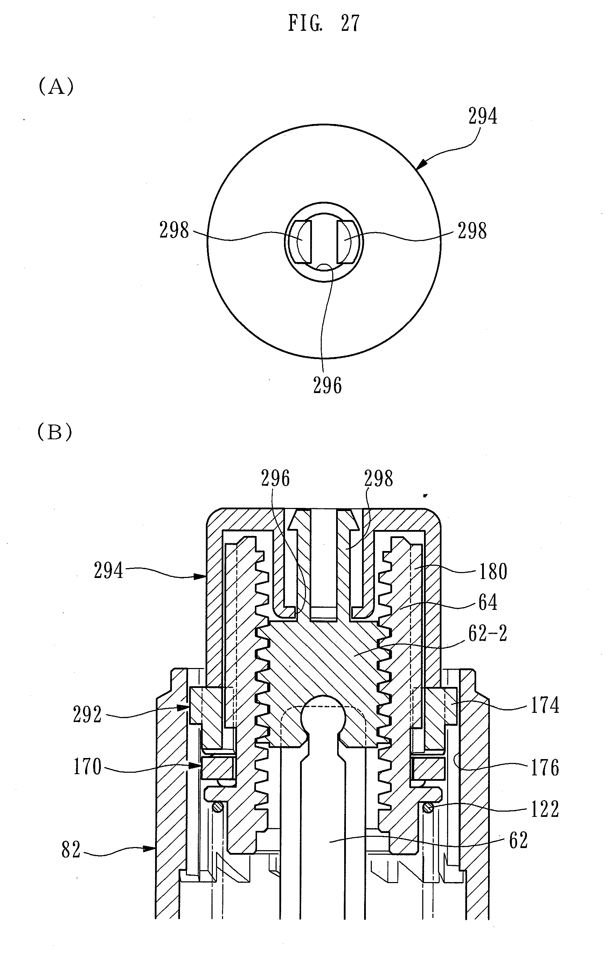

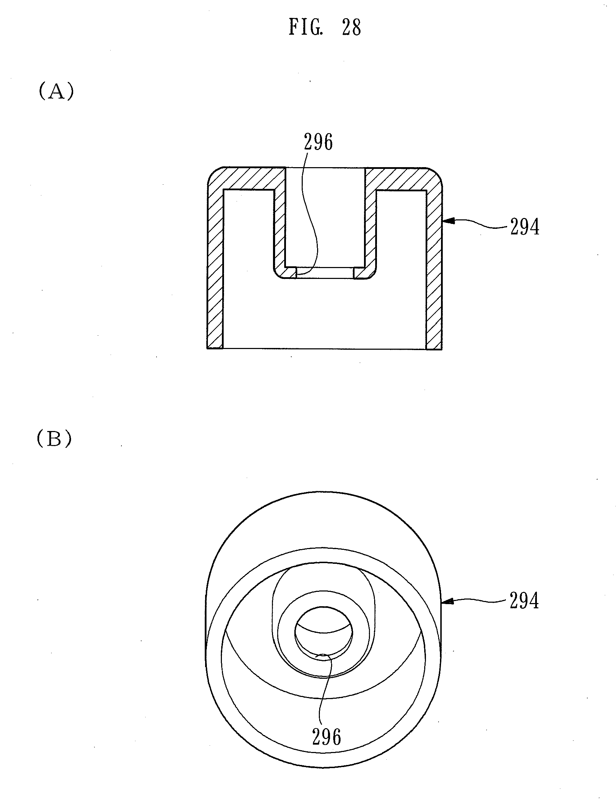

Figs. 27 and 28 shows another embodiment.
In this embodiment, a drive ring 292 is provided by a ring having a small axial length, and an inverted-cup-like shaped transmitting member 294 is interposed between the drive ring 292 and the water discharge/stop operating portion 228 so that the pressing force applied to the pushbutton-type water discharge/stop operating portion 228 is transmitted to the drive ring 292 in the axial direction.

The transmitting member 294 is isolated from rotation of the sleeve 82 so as not to be rotated by the rotation of the sleeve 82, so that the transmitting member 294 is freely rotatable relative to the drive ring 292.
That is, in this example, a member for applying the pressing force and a member for applying the rotational force are provided by respective members that are separated from each other.
The transmitting member 294 has a recess in a central portion of its upper wall, and an engaging hole 296 is provided in a bottom portion of the recess. An elastic engaging claw 298, which is provided to extend upwardly from the protruding portion 62-2 of the first axial portion 62, is held in engagement with the engaging hole 296, so that the transmitting member 294 is prevented from being removed upwardly (as seen in the figure).

While the embodiments of the present invention have been described above in detail, it is to be understood that the embodiments have been described by way of examples.
For example, in the above-described embodiments, the lock mechanism incorporated in the water discharging/stopping switching mechanism, i.e., the lock mechanism configured to alternately switch the water discharging/stopping pilot valve between the water discharge position and the water stop position and to hold the water discharging/stopping pilot valve in the position is provided by the thrust lock mechanism. However, this lock mechanism may be provided by a heart cam mechanism or any other lock mechanism.
Further, the present invention may be embodied with various changes within a range that is not deviated from the gist of the invention.

## Claims

1. A pilot-type water discharging/stopping and flow regulating valve device having:
(a) a main valve which is advanced and retreated relative to a main valve seat in directions toward and away from the main valve seat, so as to change an opening degree of a main channel;
(b) a back pressure chamber which is defined on a back side of the main valve and which causes an internal pressure therein acts as a pressing force on the main valve in a valve-closing direction;
(c) an introducing small hole which is to introduce a water from an inflow channel as a primary side portion of the main channel, into the back pressure chamber, so as to increase a pressure in the back pressure chamber;
(d) a pilot channel which is formed through the main valve and which communicates the back pressure chamber and an outflow channel as a secondary side portion of the main channel, so as to discharge the water from the back pressure chamber, for thereby reducing the pressure in the back pressure chamber;
(e) a flow regulating pilot valve which is to be advanced and retreated in advanced and retreated directions of the main valve, so as to control an opening degree of the pilot channel; and
(f) a flow regulating mechanism which is to advance and retreat the flow regulating pilot valve, so as to determine a flow regulating position according to an amount of advance/retreat movement of the flow regulating pilot valve, for thereby performing flow regulating,
wherein a flow rate of the water flowing through the main channel is regulated by causing the main valve to be advanced and retreated following the advance/retreat movement of the flow regulating pilot valve,
the pilot-type water discharging/stopping and flow regulating valve device being **characterized in that** there are provided a water discharging/stopping pilot valve for opening and closing the pilot channel and a water discharging/stopping switching mechanism for advancing and retreating the water discharging/stopping pilot valve between a water stop position for closing the pilot channel and a water discharge position for opening the pilot channel, so as to switch between water discharging and stopping, and **in that** the flow regulating mechanism is configured to maintain the flow regulating position of the flow regulating pilot valve in a flow regulating position that is previously adjusted, when the water discharging/stopping switching mechanism causes the water discharging/stopping pilot valve to perform a water discharging operation after causing the water discharging/stopping pilot valve to perform a water stopping operation.

2. The pilot-type water discharging/stopping and flow regulating valve device according to claim 1, being **characterized in that** the flow regulating pilot valve and the water discharging/stopping pilot valve are disposed separately from each other, and **in that** the flow regulating mechanism and the water discharging/stopping switching mechanism are configured to advance/retreat the flow regulating pilot valve and the water discharging/stopping pilot valve, respectively, independently of each other.

3. The pilot-type water discharging/stopping and flow regulating valve device according to claim 1, being **characterized in that** the flow regulating pilot valve and the water discharging/stopping pilot valve are constituted by a common pilot valve, and **in that** the flow regulating mechanism is configured to move the water stop position of the common pilot valve according to the adjusted flow regulating position, while the water discharging/stopping switching mechanism is configured to advance/retreat the common pilot valve between the adjusted flow regulating position as the water discharge position and the moved water stop position.

4. The pilot-type water discharging/stopping and flow regulating valve device according to claim 3, being **characterized in that** the common pilot valve is disposed in a drive rod that is expandable and contractable, and **in that** the flow regulating mechanism is configured to axially move a position of an entirety of the common pilot valve by causing the drive rod to be expanded and contracted, for thereby moving the flow regulating position and the water stop position of the common pilot valve.

5. The pilot-type water discharging/stopping and flow regulating valve device according to claim 4, being **characterized in that** the drive rod is axially divided into two divided axial portions one of which is provided with the common pilot valve such that the two divided axial portions are held in thread-engagement with each other and **in that** the drive rod is expanded and contracted by advance/retreat movement of the one of the divided axial portions, which is caused by a screw feed as a result of rotation of the other of the divided axial portions made by a rotary operating member.

6. The pilot-type water discharging/stopping and flow regulating valve device according to any one of claims 1-5, being **characterized in that** the water discharging/stopping switching mechanism has a lock mechanism configured to alternately switch the water discharging/stopping pilot valve between the water discharge position and the water stop position and to hold the water discharging/stopping pilot valve in the position.
